# EUROPEAN PATENT APPLICATION

(11) **EP 2 618 297 A1**
(43) Date of publication of application: **24.07.2013**
(21) Application number: 10857287.6
(22) Date of filing: 17.09.2010
(51) Int. Cl.: G06Q 50/00, G06F 17/30, G06Q 30/00

(54) **OPERATION INFORMATION GENERATION DEVICE**

(71) Applicant: Kabushiki Kaisha Toshiba, Minato-ku Tokyo 105-8001 (JP)
(72) Inventor: AJITOMI, Daisuke, Tokyo 105-8001 (JP); ISE, Kotaro, Tokyo 105-8001 (JP); AIZU, Hiroyuki, Tokyo 105-8001 (JP); ESAKA, Naoki, Tokyo 105-8001 (JP)
(74) Representative: HOFFMANN EITLE
(86) International application number: PCT/JP2010/066195
(87) International publication number: WO 2012/035654

(57) **Abstract**

An operation information generation device 101 includes a receiver to receive content from a server that is connected to a first network; a processor to decode the content; and a display control unit to display the decoded content on a displaying unit. The operation information generation device further includes a reception unit to receive operation of a user; and an operation information generation unit to perform operation information generation process of generating operation information indicative of substance of the operation received for the content displayed on the displaying unit.

## Description

### Field

The present invention relates to an operation information generation device.

### Background

For example, on a service provider that provides a website as content on the Internet, logs of access to the website are collected. A web browser that is installed on an information processing device, which consists mainly of PC (Personal Compuetr), collects a history of access to the website. Both of these are prevailing and general techniques. There is a technique in which preference information of a user is extracted from a history of access to a website, and a webpage is dynamically generated (see, for example, Non Patent Literature 1). Non Patent Literature 1 mentions a method of collecting a history of access as a history of watching content (a watching history) on a website, which is semantic action information of the user, and then dynamically generating a webpage based on the collected watching history. Non Patent Literature 1 also mentions a method of capturing transitions between pages within a specific website by operations of the user, and managing these as a sequence of action information.

### Citation List

### Non Patent Literature

Non Patent Literature 1: SHINYA FUKUMURA et al.: "Dynamic Production of Personalized Web Pages Based on Preference", Information Processing Society of Japan, Technical Report 2004-DBS-132, pip.57-64

### Summary

### Technical Problem

However, the technique of Non Patent Literature 1 is intended for a single website, and thus, it is difficult to collect watching history across a plurality of websites. Further, it is difficult to collect the history as semantic operation information, which is more than simple access history, of the user across the plurality of websites. The semantic operation information means a detailed history of access including variety of information that can be used for estimation of actions of the user. The operation information includes, for example, information indicative of an operation type such as "search", "view and watch", and "purchase" and information indicative of content as an operation target such as "an article within a webpage", "video", and "music". In this collection of the operation information, all that is necessary is that the webpages are provided in a format where semantic operation information can be collected as described in Non Patent Literature 1, insofar as a specific website is targeted at access to the respective pages within the website. This is comparatively simple. However, it is difficult for the technique of Non Patent Literature 1 to collect the operation information of the user across a plurality of websites. This makes it difficult to provide, for example, a service that recommends content based on collected pieces of the operation information from the plurality of websites. For example, when accessing a website that delivers videos, "video" related to a "book" is recommended based on a history of operation information indicative of a purchase of the book on a website selling books. This service has been difficult to be provided.

The present invention has been made in view of the above-described circumstances, and it is an object of the present invention to provide an operation information generation device that is capable of obtaining semantic and continuous operation information of a user across content provided by a plurality of service providers.

### Solution to Problem

To solve the problems described above and achieve the object, the present invention provides an operation information generation device that includes a receiver configured to receive content from a server connected to a first network; a processor configured to decode the content; a display control unit configured to display the decoded content on a displaying unit; a reception unit configured to receive an operation from a user; and an operation information generation unit configured to execute an operation information generation process of generating operation information indicative of substance of the operation received for the content displayed on the displaying unit.

### Advantageous Effects of Invention

The present invention makes it possible to collect the semantic and continuous operation information of the user across the content provided by the plurality of service providers.

### Brief Description of Drawings

FIG. 1 is a diagram illustrating an exemplary configuration of an operation information obtaining system according to a first embodiment.
FIG. 2 is a view illustrating exemplary control information related to an operation information generation program.
FIG. 3 is a view illustrating exemplary operation information.
FIG. 4 is a flowchart illustrating a procedure of the operation information generation process.
FIG. 5 is a diagram illustrating an exemplary payload format of an HTTP response.
FIG. 6 is a flowchart illustrating a detailed procedure of processes in steps S108 to S110.
FIG. 7 is a flowchart illustrating a procedure of operation information generation program update process.
FIG. 8 is a flowchart illustrating a procedure of operation information usage process.
FIG. 9 is a diagram illustrating an exemplary configuration of an operation information obtaining system according to a second embodiment.
FIG. 10 is a flowchart illustrating a procedure of operation information usage process.
FIG. 11 is a diagram illustrating an exemplary data configuration of operation information transmitted to a server 201C.
FIG. 12 is a diagram illustrating an exemplary configuration of an operation information obtaining system according to a third embodiment.
FIG. 13 is a flowchart illustrating a procedure of operation information usage process.
FIG. 14 is a diagram illustrating an exemplary configuration of an operation information obtaining system according to a fourth embodiment.
FIG. 15 is a table illustrating an exemplary data configuration for a user identification information storage unit 517.
FIG. 16 is a flowchart illustrating processes executed by operation information generation devices 101 and 102.
FIG. 17 is a block diagram illustrating an exemplary configuration of an operation information obtaining system according to a modification.
FIG. 18 is a view illustrating exemplary operation group information.
FIG. 19 is a flowchart illustrating a procedure of processing executed by operation information generation devices 101 and 102 according to a modification. Description of Embodiments

An embodiment of an operation information generation device according to the present invention will be described below in detail by referring to the accompanying drawings.

### First Embodiment

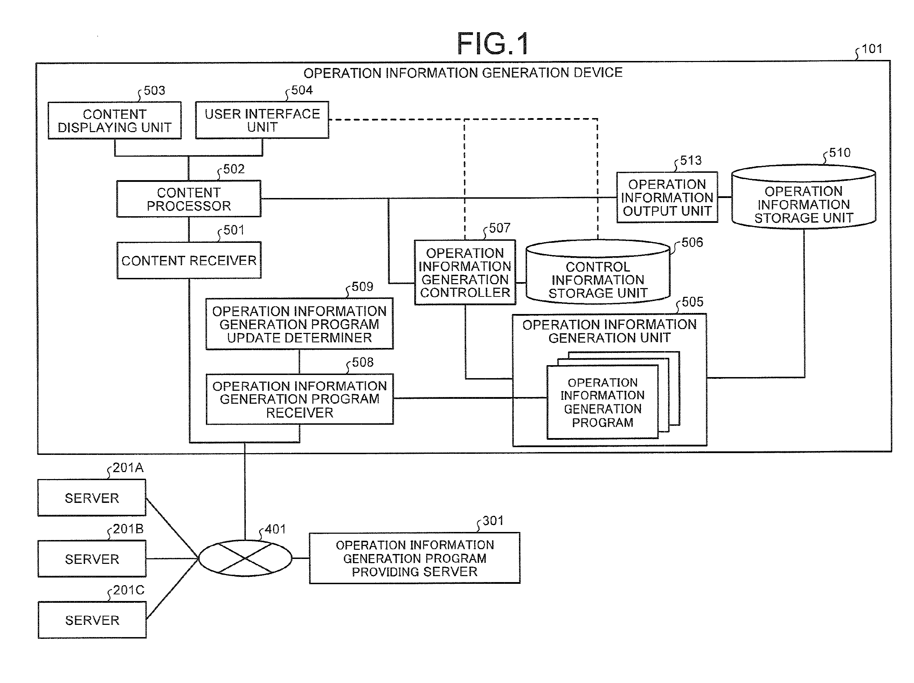

FIG. 1 is a diagram illustrating an exemplary configuration of an operation information obtaining system and an exemplary functional configuration of an operation information generation device according to this embodiment. The operation information obtaining system according to the first embodiment includes an operation information generation device 101, servers 201A to 201C, which are operated by service providers, and an operation information generation program providing server 301. The operation information generation device 101, the servers 201A to 201C, and the operation information generation program providing server 301 are connected to a network 401. The network 401 is, for example, a LAN (Local Area Network), the intranet, Ethernet (registered trademark), the Internet, a WAN (Wide Area Network), a closed network NGN (Next Generation Network) that is quality-guaranteed, and a digital terrestrial broadcasting network. An operation target network ID is preliminary assigned to the network 401 so as to distinguish the network 401 from other networks. Operation target service IDs are assigned to the respective servers 201A to 201C, so as to uniquely identify respective services within the network 401. A device ID is assigned to the operation information generation device 101, so as to distinguish the operation information generation device 101 from other information processing apparatuses. Hereinafter, when it is not necessary to distinguish among the servers 201A to 201C, the servers 201A to 201C may be simply each referred to as the server 201.

Next, a hardware configuration of the operation information generation device 101 according to this embodiment will be described. The operation information generation device 101 according to this embodiment includes a controller, a main storage unit, an auxiliary storage unit, and a bus. The controller includes a CPU (Central Processing Unit) and the like, and controls the whole device. The main storage unit includes ROM (Read Only Memory) and RAM (Random Access Memory) and the like, and stores therein various data and various programs. The auxiliary storage unit includes a HDD (Hard Disk Drive) and the like, and stores therein various data such as content and various programs. The bus connects these units to one another. The operation information generation device 101 has a hardware configuration using an ordinary computer. The auxiliary storage unit stores therein the above device IDs assigned to the operation information generation device 101. The operation information generation device 101 is connected to each of a displaying unit that displays information; an operation input unit that includes a keyboard, a computer mouse, a remote controller, a touchscreen, and the like, and receives instruction input from a user; and a communication I/F (interface) that controls communication with the external device (for example, the servers 201 and the operation information generation program providing server 301), through wired or wireless communication. The operation information generation device 101 receives information transmitted from the servers 201 and the operation information generation program providing server 301 through the communication I/F and the network 401. The operation information generation device 101 is implemented as, for example, a personal computer, a digital television, a hard disk recorder, an STB (Set Top Box), or a mobile device such as a mobile phone. The displaying unit is a display such as an LCD that is mountable on these units, and displays a screen image that is generated by execution of, for example, an Internet browser application (program).

Hardware configurations of the servers 201 are each approximately similar to that of the operation information generation device 101, and each have a hardware configuration using an ordinary computer. Each of the servers 201 may be a server that is operated by a provider of, for example, a web portal such as Yahoo! (registered trademark), an online retail website such as Amazon (registered trademark), a video sharing service website such as YouTube (registered trademark), an information website such as Gurunavi (registered trademark), an SNS (Social Network Service) website such as mixi (registered trademark), and an IPTV service such as HIKARI TV (registered trademark). Each of the servers 201 may also be a transmitter of a digital terrestrial broadcasting. The servers 201 each transmit content to the operation information generation device 101. For example, the content may be an HTML (Hypertext Markup Language) document that is displayed through an Internet browser. The content may also be multimedia data such as video, an image, music, a book, and the like, associated with the HTML document. In the case where the network 401 is a broadcasting network of digital terrestrial broadcasting, BS, CS, or the like, the content may be a broadcast program or a BML (Broadcast Markup Language) document received as data broadcasting.

The servers 201 each store therein the operation information generation program to generate operation information indicative of substance of operation input performed on the content in the operation information generation device 101. In the case where the network 401 is the Internet or an NGN, the servers 201 transmit the operation information generation program as a JavaScript program, which is content embedded in an HTML document, to the operation information generation device 101. In the case where the network 401 is a digital terrestrial, BS, or CS broadcasting network, the servers 201 transmit the operation information generation program as an ECMAScript program, which is embedded in a BML (Broadcast Markup Language) document, to the operation information generation device 101. In this case, the operation information generation program provides a function to obtain a history of browsing data broadcasting. Targeted content, from which operation information is to be obtained, is preliminary specified in the operation information generation program. Content specification information, which specifies the targeted content, and program identification information (a program ID), which identifies the operation information generation program itself, are preliminary assigned to the operation information generation program. The content specification information indicates, for example, content identification information to identify the content. In the case where the content is an HTML document, the content identification information as an HTML document, which is open to public through the network 401, may be a URI (for example, "http://www.example.com/path/to/doc.html") indicative of a single webpage, or may be a URI (for example, "http://www.example.com/path/to/*") indicative of a path that includes a plurality of webpages. When the content identification information (content ID) to identify content is preliminary assigned to the content, the content ID may be used as the content specification information. In the case where the operation information generation program targets given content, the content specification information may be a wildcard character indicative of the given content (for example, "*"). The operation information generation program includes, in addition to the content specification information and the program identification information, acquisition location information, revision date and time information, and applicability information, for example, as metadata. The acquisition location information indicates a location at which the operation information generation program is obtained. The revision date and time information indicates date and time at which the operation information generation program is updated. The applicability information indicates whether the operation information generation program is applicable. The acquisition location information means, for example, an IP address for identifying the servers 201A to 201C (or the operation information generation program providing server 301) that has transmitted the operation information generation program to the operation information generation device 101, or unit IDs that are uniquely assigned to these units. The server 201 stores therein an operation information usage program to use the operation information as necessary. The server 201 embeds the operation information usage program in content, and accordingly transmits it to the operation information generation device 101. The operation information generation program and the operation information usage program will be specifically described below in a section of operation.

The operation information generation program providing server 301 has a hardware configuration that is approximately similar to the operation information generation device 101. The hardware configuration employs an ordinary computer. The operation information generation program providing server 301 is, for example, a server that is installed on the Internet by a provider who sells the operation information generation device 101, or a server that is installed by a service provider who operates any one of the servers 201. The operation information generation program providing server 301 stores therein operation information generation programs corresponding to respective pieces of content, which are provided by the servers 201. The operation information generation program providing server 301 appropriately updates the stored operation information generation programs in response to updates of the content or updates of the operation information generation programs themselves. The operation information generation program providing server 301 appropriately transmits the operation information generation programs to the operation information generation device 101 in response to a request from the operation information generation device 101.

Next, in the above-described hardware configuration, various functions achieved by execution of various programs by the CPU in the operation information generation device 101, which are stored in the main storage unit and the auxiliary storage unit, will be described by referring to FIG. 1. The operation information generation device 101 includes a content receiver 501, a content processor 502, a content displaying unit 503, a user interface unit 504, an operation information generation unit 505, a control information storage unit 506, an operation information generation controller 507, an operation information generation program receiver 508, an operation information generation program update determiner 509, an operation information storage unit 510, and an operation information output unit 513. The content receiver 501, the content processor 502, the operation information generation unit 505, the operation information generation controller 507, the operation information generation program receiver 508, the operation information generation program update determiner 509, and the operation information output unit 513 are generated on the main storage unit such as RAM when the CPU executes the programs. The control information storage unit 506 and the operation information storage unit 510 are, for example, database management systems that are established in the main storage unit or the auxiliary storage unit. These storage units may be XML (extensible Markup Language) databases or relational databases. These storage units are not necessarily established with single database management systems. A plurality of the database management systems such as an SQLite3, an Oracle, and a MySQL may be used in parallel. The control information storage unit 506 and the operation information storage unit 510 may be established in one physical storage unit (the main storage unit or the auxiliary storage unit), or may be database management systems configured to have a plurality of physical auxiliary storage units such as NAS (Network Attached Storage) and SAN (Storage Area Network). The control information storage unit 506 and the operation information storage unit 510 do not have to be the database management systems. The control information storage unit 506 and the operation information storage unit 510 may be configured as a file group simply in a CSV format, a Key/Value store, or the like insofar as they include a means for obtaining respective piece of information (entries), which is stored in respective storage units.

The content receiver 501 receives pieces of content from the servers 201 through the network 401. In the case where the network 401 is the Internet or an NGN, the content receiver 501 is an HTTP (Hypertext Transfer Protocol) client implemented on a TCP (Transmission Control Protocol), an RTP (Real-time Transport Protocol) client implemented on a UDP (User Datagram Protocol), or a FLUTE (File Delivery over Unidirectional Transport) client. However, any communication protocol may be used insofar as the content receiver 501 can receive the content from the servers 201. In the case where the network 401 is a digital terrestrial broadcasting network, the content receiver 501 has a function to receive, for example, an MPEG-2 stream. In this embodiment, the content receiver 501 is assumed to be an HTTP client that is used in an Internet browser application, which is typified by IE (Internet Explorer), FireFox, Opera, or the like.

The operation information generation program receiver 508 transmits a request message for requesting transmission of the operation information generation program to the operation information generation program providing server 301, so as to receive the operation information generation program from the operation information generation program providing server 301, and stores the program in the auxiliary storage unit. In the case where the operation information generation program is provided for each piece of content, the operation information generation program receiver 508 includes content identification information of content in the request message, which corresponds to the operation information generation program of a reception target to be received, so as to specify the operation information generation program to be received. In the case where the operation information generation program is embedded in the content, the operation information generation program receiver 508 obtains the operation information generation program from the content, which is received from the servers 201, so as to store the program in the auxiliary storage unit. The operation information generation program receiver 508 stores the metadata, which is attached to the operation information generation program, in the control information storage unit 506 as control information. The operation information generation program may be updated, and thus, the control information includes revision information (for example, a version number). The control information will be described below in detail. The revision information may be used as follows. By using the revision information, the operation information generation program receiver 508 adds the revision information, which is stored in the auxiliary storage unit at this point, of the operation information generation program to the request message, and transmits the request message to the operation information generation program providing server 301. Thus, the operation information generation program receiver 508 may receive difference information alone, which indicates an updated part when the operation information generation program is updated, from the operation information generation program providing server 301.

The content processor 502 decodes the content received at the content receiver 501, and transmits it to the content displaying unit 503. Specifically, in the case where the network 401 is the Internet or an NGN, the content processor 502 is an analyzing and executing unit that analyzes and executes a JavaScript with an HTML parser and renderer. In the case where the network 401 is a broadcasting network of digital terrestrial broadcasting, BS, CS or the like, the content processor 502 is an analyzing and executing unit that analyzes and executes an ECMAScript with an MPEG-2 decoder and a BML parser and renderer. However, the content processor 502 is not limited to these processing systems. In this embodiment, the content processor 502 is assumed to be the analyzing and executing unit that analyzes and executes a JavaScript with an HTML parser and renderer. That is, the content processor 502 has a core function of the Internet browser application.

The content displaying unit 503 is a display control unit that displays the content, which is decoded by the content processor 502, on the displaying unit. The user interface unit 504 receives the operation input of the user through the operation input unit regarding the content, which is displayed on the displaying unit by the content displaying unit 503.

The operation information generation unit 505 executes the operation information generation programs, which are received from the servers 201 and the operation information generation program providing server 301, under control of the operation information generation controller 507. The operation information generation program analyzes, as an input event, the operation input received at the user interface unit 504 regarding the content displayed on the displaying unit by the content displaying unit 503, so as to achieve a function of generating the opration information indicative of substance of the input event.
The operation information obtaining program may be obtained from the operation information generation program providing server 301 through the network 401 before the content is displayed, or may be preliminary embedded in the operation information generation device 101. For example, in the case where content of an application target is web content, the operation information generation unit 505 includes a main event handler, and the operation information generation program achieves respective functions of an event handler registration processor, which obtains the input event regarding the content displayed on the displaying unit by the content displaying unit 503, and an event handler processor. The event handler processor is a core of operation information generation process. The event handler processor generates the operation information from the input event and the targeted content, and stores the operation information in the operation information storage unit 510. The operation information generation unit 505 executes the operation information generation program to generate the operation information, thus storing it in the operation information storage unit 510. In the case where the network 401 is a digital terrestrial, BS, or CS broadcasting network, the operation information generation program is not obtained from the servers 201 or the operation information generation program providing server 301. The operation information generation program may be preliminary stored in, for example, the auxiliary storage unit as an operation history capturing program.
The operation history capturing program achieves a function of obtaining a channel tuning history indicative of zapping between channels or specifying a channel.

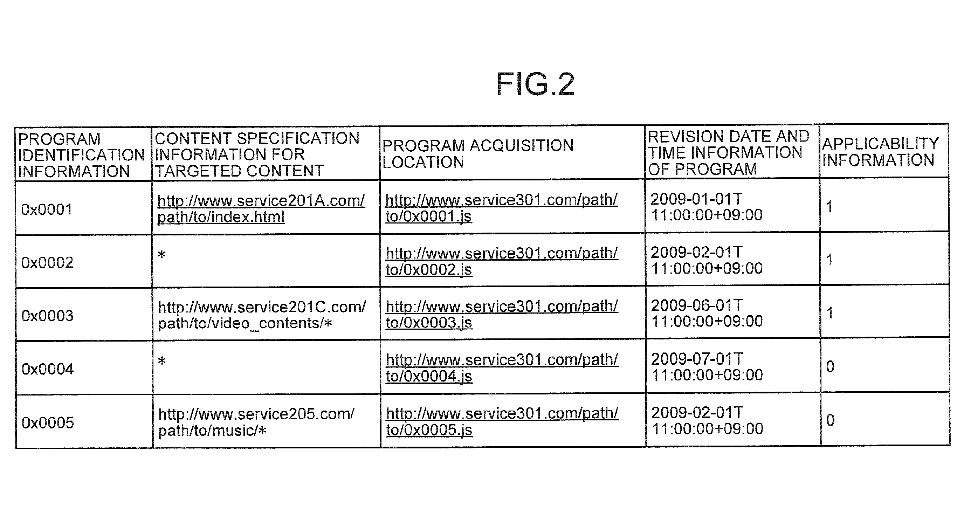

The control information storage unit 506 stores therein the metadata as the control information. The metadata is attached to the operation information generation program, which is obtained by the operation information generation program receiver 508. FIG. 2 is a view exemplarily illustrating the control information related to the operation information generation program. The control information includes the program identification information and content specification information, the acquisition location information, the revision date and time information, and applicability information. In the drawing, an operation information generation program with a program ID of "0x0002" and an operation information generation program with a program ID of "0x0004" each correspond to control information with a wildcard character "'*'" as the content specification information, and each target the given content as described above. The applicability information is information indicative of whether or not it is possible to apply the operation information generation program, that is, whether or not it is possible to execute the operation information generation program. In the case where it is possible to apply the operation information generation program, the applicability information indicates "1". In the case where it is not possible to apply the operation information generation program, the applicability information indicates "0". The control information storage unit 506 stores therein the control information in, for example, a table within the database system.

The operation information generation controller 507 determines whether to apply the operation information generation program on the content, which is processed by the content processor 502, based on the control information stored in the control information storage unit 506.

The operation information generation program update determiner 509 detects error occurrence during execution of the operation information generation program. Alternatively, the operation information generation program update determiner 509 compares revision date and time information indicative of date and time of generating or updating the content, which is received at the content receiver 501, with another revision date and time information included in the control information including the content specification information, which is indicative of the content identification information of the content, among pieces of the control information stored in the control information storage unit 506. With either one of these two methods, the operation information generation program update determiner 509 determines whether or not there is a need for updating the operation information generation program.

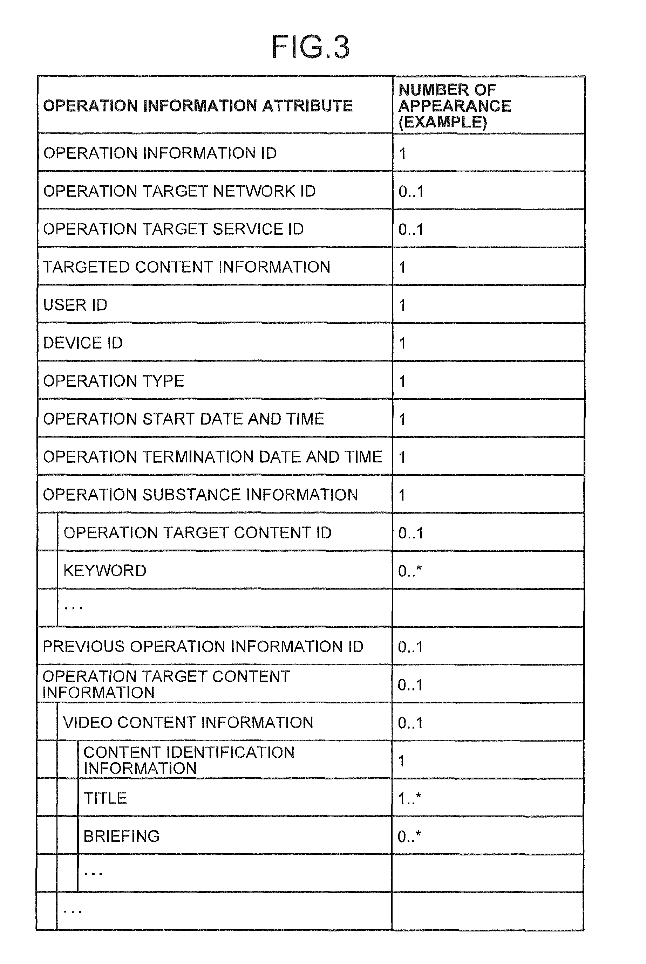

The operation information storage unit 510 stores therein the operation information, which is generated by the operation information generation unit 505 based on the operation input for the content of the application target, through the execution of the operation information generation program. FIG. 3 is a view exemplarily illustrating the operation information. As illustrated in the drawing, the operation information includes, as information (which is referred to as attribute information) indicative of attribution of the operation information: an operation information ID used for identifying at least the operation information; the content identification information of the targeted content used for obtaining the operation information; user identification information which is used for identifying the user that has performed the operation input or which indicates that the user is an anonymous (any) user; operation type information (for example, search, purchase, transition, watch and the like) which indicates a type of content of the operation input (which is referred to as an operation type); operation target information (including, for example, the content identification information (which is referred to as operation target content ID) that is attached to the content to be searching strings, a target for browsing, watching, purchasing, or the like) which indicates the operation target corresponding to the operation type; operation start date and time information which indicates date and time at which the operation input started; and operation termination date and time information which indicates date and time at which the operation input terminated. As the user identification information, for example, a user ID that the user inputs when logging in the operation information generation device 101 may be used. Further, the operation information may include: the operation target network ID used for distinguishing the network 401 from other networks; the operation target service ID used for uniquely identifying the service within the network 401; the device ID used for distinguishing the operation information generation device 101 from other information processing apparatuses; a previous operation information ID which is an operation information ID of operation input that is performed prior to the operation input corresponding to the operation information; and content detail information which indicates substance of the content that is the operation target. With the previous operation information ID, the operation information can be associated with operations before and after the operation information. The content detail information may be stored in the auxiliary storage unit separately from the operation information.

In response to a request by the operation information usage program embedded in the content, which is received at the content receiver 501, to access the operation information stored in the operation information storage unit 510, the operation information output unit 513 outputs the operation information based on the request. In the case where the network 401 is the Internet or an NGN, the operation information usage program is a JavaScript program embedded in an HTML document. For example, the operation information usage program achieves a function of changing displayed substance of the content, using the output operation information.

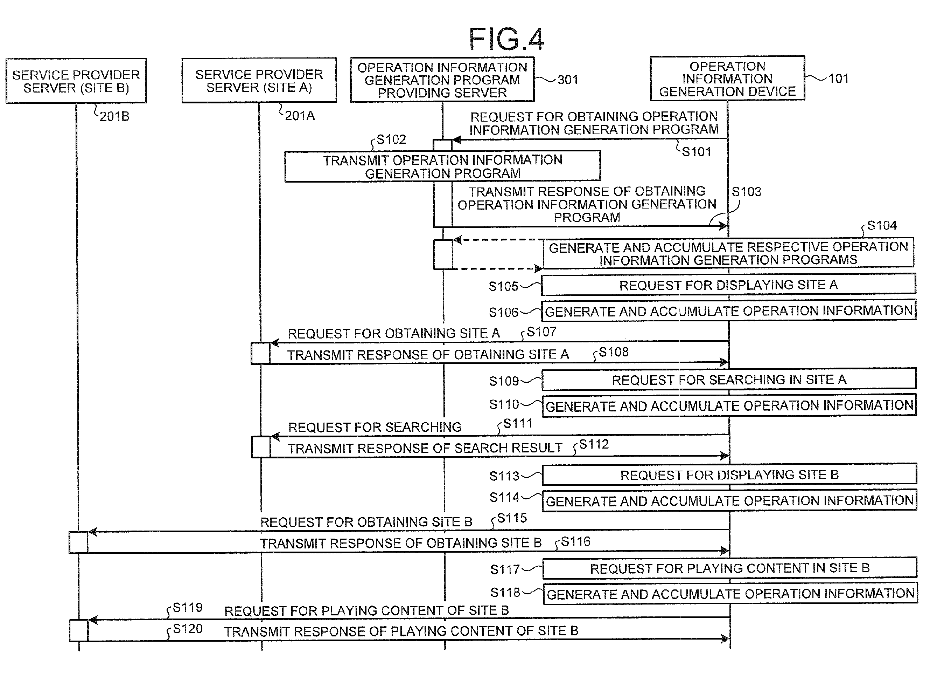

Next, a procedure of processing that is executed by the operation information generation device 101 according to this embodiment will be described. First, a procedure of the operation information generation processing will be described by referring to FIG. 4. The operation information generation device 101 transmits the request message to request for obtaining the operation information generation program to the operation information generation program providing server 301 through the network 401 (step S101). The request message is, for example, an HTTP GET request. At this time, if the request is the first access to the operation information generation program providing server 301, the operation information generation device 101 attaches, for example, parameters for requesting the all operation information generation programs to the HTTP GET request. Alternatively, the interface may be designed such that an HTTP GET request without being specified with the parameter indicates the request for obtaining all the operation information generation programs. For example, in the former case, the request URL indicative of requesting for obtaining the all operation information generation programs is assumed to be "http://www.service201.com/path/to/get_program?content_id=* " (actually, a query part (after "?") is URL-encoded). In the latter case, the request URL is assumed to be "http//www.service201.com/path/to/get_program".

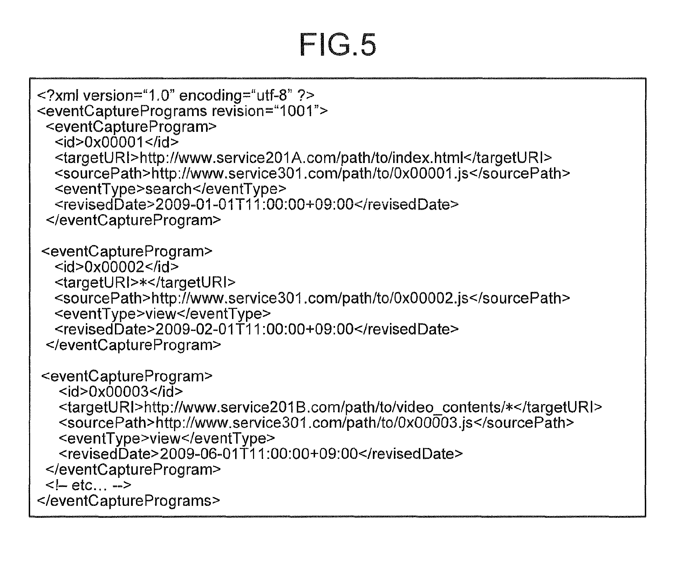

When the operation information generation program providing server 301 receives the HTTP GET request, the operation information generation program providing server 301 analyzes a request parameter ("content_id=*" in the above example) included in the request message, obtains the operation information generation program from the main storage unit and the auxiliary storage unit of the operation information generation program providing server 301 (step S102), and transmits it (step S103). In this embodiment, the operation information generation program providing server 301 transmits all the operation information generation programs. FIG. 5 is a diagram exemplarily illustrating a payload format of the HTTP response to be transmitted at this time. FIG. 5 is a list illustrating data of the operation information generation programs, which is described in an XML format. Its root element is illustrated as <eventCapturePrograms>. This root element has revision attribute, which is an ID identifying the revision information of the whole list of the operation information generation programs. Althrough this attribute information is not essential in this embodiment, for example, in order to update all the operation information generation programs to the latest state, the revision information (revision) included in the control information, which is stored in the operation information generation device 101, regarding the operation information generation programs is specified as the query parameter of the URL. The operation information generation program providing server 301 transmits difference information between revision attribute values alone, thus ensuring efficient update for the operation information generation programs. The processing for updating the operation information generation programs will be described below in detail. In FIG. 5, as a child element of the root element, <eventCaptureProgram> element is included. This is metadata, which is attached to the operation information generation program. <id> element is the program identification information, which is attached to the operation information generation program, to be unique within the operation information generation program providing server 301. <targetURI> element is the content specification information to specify the targeted content to apply the operation information generation program. Among three elements of <eventCaptureProgram> in the example of FIG. 5, the first element illustrates a specific URL. It is illustrated that only when a resource of "http://www.service201A.com/path/to/index.html" is accessed, the operation information generation program is applied or executed. The second element illustrates "*", that is, an operation information generation program that can be applied to given URL. The third element illustrates a specific URL path. It is illustrated that when a resource in "http://www.service201B.com/path/to/video_contents/" or its subordinate directory is accessed, the operation information generation program is applied. <soucePath> element illustrates a storage location in which the respective operation information generation programs are actually stored.

The operation information generation device 101 accesses the respective URLs based on the payload of the response, and transmits the HTTP request to obtain individual operation information generation programs (step S104). Alternatively, a source code of a program for the operation information generation device may be directly embedded in the payload by, for example, embedding <script> element instead of <sourcePath> element. <eventType> is a piece of the operation type information that is information indicative of the operation input of the user as an action, which has a meaning, such as "search", "view", "watch", and "purchase". FIG. 5 illustrates that the first program extracts the operation input related to "search", while the second and third programs extract the operation input related to "view". <revisedDate> is the revision date and time information indicative of date and time of generating or updating the operation information generation program. While in this embodiment, the response payload is described in the XML format, the response payload is not limited to the XML format insofar as its format is configured as follows. In the format, the metadata of each operation information generation program includes at least the program identification information (corresponding to <id> element), the content specification information that specifies the targeted content to apply the operation information generation program (corresponding to <targetURI> element), the program source code (corresponding to <sourcePath> or <script> element), and the operation type information (corresponding to <eventType>). Additionally, the operation information generation device 101 can uniquely interpret the response payload.

Subsequently, the operation information generation device 101 accesses each URL based on <sourcePath> element included in the payload of the response, transmits the HTTP request to obtain the individual operation information generation programs, and stores it in the auxiliary storage unit, thus ensuring a function of the operation information generation unit 505 (step S104). Alternatively, as described above, for example, in the case where <script> element is provided so as to directly embed the program source code in the payload, the operation information generation device 101 extracts the respective operation information generation programs from the payload of the received response, and stores the programs in the auxiliary storage unit, so as to achieve a function of the operation information generation unit 505. At the same time, the operation information generation device 101 stores the metadata attached to the respective operation information generation programs in the control information storage unit 506 (step S104). The pieces of the revision information, which are revision attribute values exemplarily illustrated in FIG. 5, are included in the control information, then being stored in the control information storage unit 506. That is the whole procedure of the process for obtaining the operation information generation programs.

Here, a specific example of the operation information generation program in this embodiment will be described. In the payload of the response exemplarily illustrated in FIG. 5, data pieces of three operation information generation programs are stored. The first program is the operation information generation program to obtain the operation information that has the operation type of "search", and targets a search site (www.service201.com) for application. That is, the program is to capture, as an input event, the operation input representing that a search regarding a character string that is input to a search box in <form> tag of the HTML document is submitted. For example, the program is to capture the input event in which a search button is clicked on the top page of Google (registered trademark) or Yahoo! (registered trademark).

The second program is the operation information generation program to obtain the operation information having the operation type of "view", and targets all pieces of the content for application. The program is to capture the input event in which the link of <a> tag in the HTML document is clicked (a page of the link destination is accessed), and to generate the operation information indicative of the substance of the input event. The third program is the operation information generation program to obtain the operation information having the operation type of "watch" of the content, and targets a video sharing site (www.service202.com) for application. For example, the program is to capture an input event for a Flash Player object embedded in a detail page for moving images in YouTube, and to generate the operation information indicative of the substance of the input event.

Next, the operation information generation device 101 initiates the Internet browser application based on the operation input from the user through the operation input unit, and accesses the top page (http://www.service201.com/path/to/index.html) of the server 201A (site A), which is set to the home page (a page set to be displayed first on start-up) (step S105). At this time, the operation information generation device 101 may generate the operation information by capturing the operation input itself as the input event, and may store it in the operation information storage unit 510 (step S106). In this case, the operation information generation program is to: target all pieces of the content for application; capture an input event of accessing to a new URL; and then generate operation information indicative of substance of the input event.

The operation information generation device 101 accesses the top page of the site A (step S107), and receives the HTML document representing the top page as the content using the function of the content receiver 501 (step S108). The operation information generation device 101 decodes the HTML document, which is received in step S108, using the function of the content processor 502. Then, the operation information generation device 101 displays the HTML document on the displaying unit using the function of the content displaying unit 503. Here, for example, the site A is assumed to be the top page of Google (registered trademark). When the user inputs a keyword to a search window and clicks a search button as the operation input (step S109), the operation information generation device 101 receives the operation input, and executes the operation information generation program with the program ID of "0x0001" exemplarily illustrated in FIG. 2. As a result, the operation information generation device 101 attaches the operation information ID to the operation input, generates the operation information, and stores it in the operation information storage unit 510 (step S110). The operation information includes: the operation information ID; the operation type information indicative of the operation type of "search"; the content identification information of the top page of Google (registered trademark) as the content; identification information of the user who has performed the operation input; the operation type information indicative of the operation type; the operation target information corresponding to the operation type; the operation start date and time information; and operation termination date and time information indicative of the date and time at which the operation input terminated. The operation information generation device 101 may generate the operation information that includes the operation target network ID, the operation target service ID, the device ID, the previous operation information ID, and content detail information, and may store them in the operation information storage unit 510.

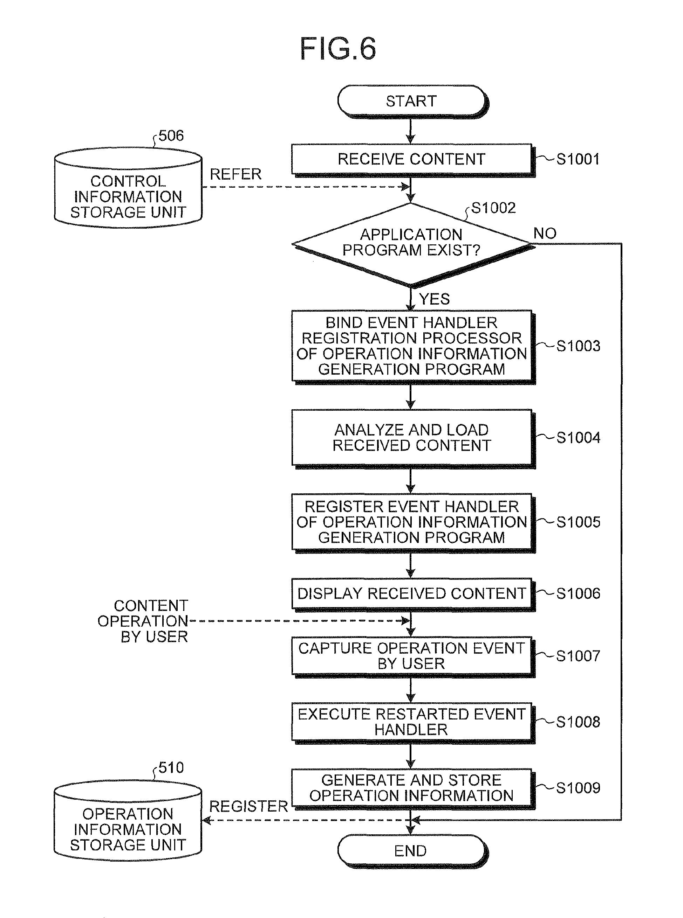

Next, a procedure of the processing of steps S108 to S110 will be described in detail by referring to FIG. 6. First, the content receiver 501 of the operation information generation device 101 receives the HTML document representing the top page of the site A as the content (step S1001). Next, the operation information generation controller 507 determines whether or not there is any operation information generation program that targets the content for application (step S1002). Specifically, the operation information generation controller 507 determines whether or not the control information including the content specification information (for example, "http://www.service201.com/path/to/index.html") indicative of the content identification information of the content is stored in the control information storage unit 506. For example, in the example of FIG. 2, it is determined that the pieces of the control information in the second line and the third line are stored to be matched. In the third line, since any content is targeted for application, the control information is matched. Thus, in the case where the matched control information is stored, the operation information generation controller 507 further determines whether or not the applicability information included in the control information indicates that the operation information generation program is applicable. In the example of FIG. 2, the pieces of applicability information in the respective pieces of the control information in the second and third lines indicate that the operation information generation programs are applicable. Thus, the operation information generation controller 507 determines that the operation information generation programs with the program ID of "0x0001" and the operation information generation program with the program ID of "0x0002", which are included in the control information, exist as the operation information generation programs that target the content received in step S1001 for application. On the other hand, in the case where there is no operation information generation program that target the content received in step S1001 for application, the operation information generation process terminates.

Subsequently, the operation information generation controller 507 transfers the applicable operation information generation programs (in the example of FIG. 2, the operation information generation program with the program ID of "0x0001" and the operation information generation program with the program ID of "0x0002") to the operation information generation unit 505. The operation information generation unit 505 associates the event handler registration processors of the respective operation information generation programs with the main event handler included in the operation information generation unit 505 (step S1003) so that event handler registration process of the operation information generation program to be applied is executed when the content displaying unit 503 loads the content to display the content on the displaying unit.

Based on the above preprocessing, when the content processor 502 decodes the content received in step S1001, and the content displaying unit 503 then loads the content (step S1004), the operation information generation unit 505 executes the main event handler (an event handler that captures loading of the content to be displayed as an event) associated with the event handler registration processors (step S1005). Subsequently, the operation information generation unit 505 executes the event handler registration process of the operation information generation programs, with which the event handler registration processors are associated. Specifically, in the event handler registration process for the operation information generation program with the program ID of "0x0001" in the example of FIG. 2, the operation information generation unit 505 analyzes the HTML document, which is the content received in step S1001. Then, regarding specific <form> element with type attribute of "submit", the operation information generation unit 505 detects the keyword, which is input to the search window included in the HTML document by the user through the operation input unit, and the input event indicative of clicking the search button. In response to the detection, the operation information generation unit 505 registers the event handler processor, which stores the operation information including the operation type information indicative of the operation type of "search" in the operation information storage unit 510, in such a manner that the event handler processor is called out when the search button in the HTML document is clicked. In the event handler registration process of the operation information generation program with the program ID of "0x0002" in the example of FIG. 2, the operation information generation unit 505 analyzes the HTML document of the content received in step S1001. Then, regarding all <a> elements, when the operation input of clicking is performed through the operation input unit, the operation information generation unit 505 detects a linked string, which is a linked character string in the HTML document, and the input event of transitions between pages. In response to the detection, the operation information generation unit 505 registers the event handler processor, which generates the operation information including the operation type information indicative of the operation type of "view" and stores it in the operation information storage unit 510, in such a manner that the event handler processor is called out when the operation input of clicking is performed.

The content displaying unit 503 displays the HTML document on the displaying unit (step S1006). When the user performs the operation input in which the user inputs a keyword to the search window in the HTML document and clicks the search button, the operation information generation unit 505 receives the operation input (step S1007), and calls the event handler processor of the operation information generation program with program ID "0x0001" (step S1008). The event handler processor generates the operation information, and stores it in the operation information storage unit 510 (step S1009) as exemplarily illustrated in FIG. 3. The operation information includes at least: the operation type information indicative of the operation type of "view"; the operation information ID; the content identification information of the HTML document displayed in the displaying unit as the content; the user identification information of the user who has performed the operation input; the operation type information indicative of the operation type; the operation target information corresponding to the operation type; the operation start date and time information indicative of the date and time at which the operation input started; and operation termination date and time information indicative of the date and time at which the operation input terminated.
Then, the operation information generation device 101 terminates the process for generating the operation information when operation input (input event) performs an operation input to request a request of displaying another piece of the content, transition on the screen has occurred in the displaying unit, and then the processing for displaying the content received in step S1001 has terminated. On the other hand, the process for displaying the content received at step S1001 does not terminate, the operation information generation device 101 waits for operation input (step S1007).

Next, returning to FIG. 4, a procedure of the process that is executed by the operation information generation device 101 in response to the operation input received in step S1007 will be described. In response to the operation input, the operation information generation device 101 first executes process in step S111. In step S111, the operation information generation device 101 transmits a search request message to the server 201 (step S111). The search request message requests search for the content that includes the keyword, which is input in step S1007. The operation information generation device 101 receives an HTML document as the content (step S112). The HTML document is indicative of a list of pieces of content that are obtained as a search result. The HTML document is, for example, a search result screen on Google, and the content specification information is assumed to be URI of "http://www.service201.com/path/to/result?tag= keyword". The HTML document includes a linked string indicative of a link to the content obtained as the search result. The operation information generation device 101 determines whether there is any operation information generation program that targets the HTML document for application. In the example of FIG. 2, the operation information generation program with the program ID of "0x0002" is matched alone. The operation information generation device 101 executes the processing of steps S1004 to S1007 illustrated in FIG. 6, and displays the HTML document, which is indicative of the list of pieces of the content obtained as the search result, on the displaying unit. When the user performs the operation input of clicking the linked string in the HTML document, the operation information generation device 101 receives the operation input (step S113), and executes the operation information generation program with the program ID of "0x0002" so as to execute the processing of steps S1008 to S1009 illustrated in FIG. 6. Then, the operation information generation device 101 generates the operation information including the operation type information indicative of the operation type of "view", and stores it in the operation information storage unit 510 (step S114).

For example, it is assumed that the operation input of clicking is performed on a linked string, and a URI of the link indicated with the linked string is "http://www.service201B.com/path/to/video_contents/xxx".
In this case, the operation information generation device 101 accesses to the URL, receives content in step S1001 of FIG. 6, similarly to the above description, and executes the processing of steps S1002 to S1009. The processes correspond to the processes of steps S117 to S120. The operation information generation device 101 applies the operation information generation program with the program ID of "0x0003" to the content. Then, the operation information generation device 101 generates the operation information that includes the operation type information indicative of the operation type of "view", and stores it in the operation information storage unit 510.

With the whole process sequence, performing the operation information generation process ensures collecting the operation information across the plurality of sites, which is provided by the plurality of respective servers 201A to 201C, on the operation information generation device 101. However, when a layout of the page or the like is changed, an operation information generation program that is specialized for a specific site often becomes inexecutable, and then, the operation information generation program becomes invalid. In the example of FIG. 2, the operation information generation program with the program ID of "0x0002" captures the input event of transition to the link using <a> tag, which is applicable to a given site. In the case where the operation information generation program is such a general-purpose program, although there is no need for rewriting the operation information generation program, in the operation information generation program with the program ID of "0x0001" and the operation information generation program with the program ID of "0x0003", they may become inexecutable along with changing a layout of the page or the like. In such a case, in this embodiment, the operation information generation programs are updated to correspond with the page having the changed layout or the like, and then, the operation information generation device 101 obtains the updated program and updates the operation information generation program stored in itself.

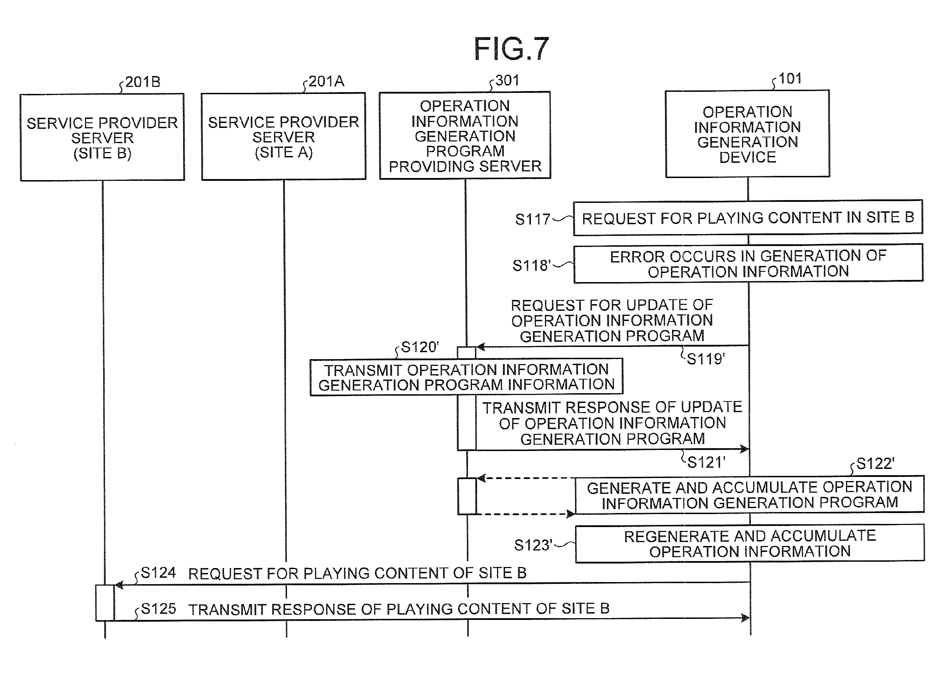

Here, a procedure of operation information generation program update process in which the operation information generation device 101 updates the operation information generation program will be described by referring to FIG. 7. First, similarly to steps S115 to S116 in FIG. 4, the operation information generation device 101 receives, from the server 201B, content expressed in a URL of "http://www.service201B.com/path/to/video_contents/xxx". The operation information generation device 101 decodes the content and displays it on the displaying unit. Similarly to steps S1002 to SS1006 as exemplarily illustrated in FIG. 6, the operation information generation device 101 obtains the operation information generation program with the program ID "0x0003", which is exemplarily illustrated in FIG. 2, as the operation information generation program that is applicable to the content. This content is video in which a media player (for example, Flash Player) is embedded. First, the media player is displayed on the displaying unit. When the user operates the media player, which is displayed on the displaying unit, so as to perform operation input to order playing the video, the operation information generation device 101 receives the operation input (step S117), executes the operation information generation program with the program ID of "0x0003", and captures the operation input as an input event to order playing. Then, it is assumed that the execution of the operation information generation program terminates with an error for the reason of, for example, changing the layout (step S118').

With the error termination as a trigger, the operation information generation device 101 uses a function of the operation information generation program update determiner 509, so as to execute checking updates for the operation information generation program (step S119'). At this time, the operation information generation device 101 transmits, to the operation information generation program providing server 301, an HTTP GET request used for requesting to update the operation information generation program with the program ID "0x0003". In the case where the program ID is explicitly specified to perform update, the program ID may be specified in the query parameter, for example, using a request URL of "http://www.service201B.com/path/to/update_program?program_ id=0x0003". Alternatively, in the case where all operation information generation programs are updated, for example, using the request URL of "http://www.service201B.com/path/to/update_program?revision =1001", the revision information (the revision attribute value: see FIG. 5), which is stored in the control information storage unit 506 at the time and which is included in the control information of the operation information generation program, is specified so as to obtain the difference information indicative of difference up to the latest revision information. The update request of the operation information generation program is not limited to these two methods. The content specification information to specify the targeted content for application and other information may be used as condition for obtaining. The protocol (HTTP) and the interface (a URL-based query format) are not limited to the above example either.

When receiving the HTTP GET request for requesting update of the operation information generation program, the operation information generation program providing server 301 reads out an updated operation information generation program in response to the request (step S120'). Then, the operation information generation program providing server 301 transmits a response indicative of a location to store the operation information generation program in, for example, an XML format illustrated in FIG. 5 to the operation information generation device 101 (step S121'). Alternatively, the operation information generation program providing server 301 may directly embed a source code of the operation information generation program with <script> element in the payload of the respone and transmit it to the operation information generation device 101. On the other hand, in the case where the operation information generation program with the specified program ID has not been updated, the operation information generation program providing server 301 may transmit an error message to notify that there is no updated operation information generation program, or alternatively, may transmit the operation information generation program with the specified program ID, which is not updated.

In the case where the operation information generation program with the specified program ID has been updated, when the operation information generation device 101 receives the response by using a function of the operation information generation program receiver 508, the operation information generation device 101 transmits an HTTP request to obtain the operation information generation program based on <sourcePath> element in the payload of the received response, and stores the program in the auxiliary storage unit (step S122'). Alternatively, in the case where the source code of the operation information generation program is directly embedded in the payload with <script> element, the operation information generation device 101 extracts the operation information generation program from the payload of the received response, and stores the program in the auxiliary storage unit. At the same time, the operation information generation device 101 stores metadata of the operation information generation program in the control information storage unit 506 as the control information (step S122'). In the case where the update is performed using the revision information, the operation information generation device 101 stores, in the control information storage unit 506, the control information that includes, as the revision information, the revision attribute value exemplarily illustrated in FIG. 5. The operation information generation device 101 uses a function of the operation information generation unit 505 to execute the updated operation information generation program, and performs the operation information generation processing again. In the case where the execution has succeeded, the operation information generation device 101 generates the operation information that includes the operation type information indicative of the operation type of "view", and stores the information in the operation information storage unit 510 (step S123'). Then, the operation information generation device 101 receives the content expressed in a URL of "http://www.service201B.com/path/to /video_contents/xxx"' from the server 201B again, decodes the received content, and displays it on the displaying unit (steps S124 to S125).

With the above configuration, even in the case where websites provided by the servers 201 are redesigned and layouts of the pages are changed, the operation information generation device 101 ensures updates of the operation information generation programs and execution of the operation information generation programs. Thus, the operation information generation device 101 can collect pieces of the operation information across the plurality of websites.

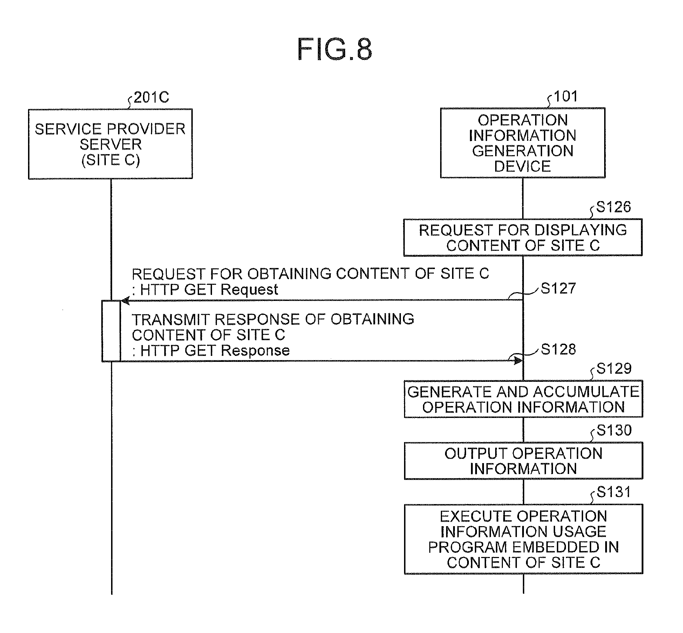

Next, a procedure of operation information usage process of the operation information generation device 101 according to this embodiment will be described by referring to FIG. 8. In this process, the server 201 (here, the server 201C) uses pieces of the operation information, which are obtained across a plurality of websites by the operation information generation device 101. First, when the user performs operation input to request for access to a top page of a site C, which is provided by the server 201C, through the operation input unit of the operation information generation device 101 while the operation information generation device 101 is executing an Internet browser application, the operation information generation device 101 receives the operation input (step S126), and transmits an HTTP GET request to request an HTML document representing the top page (step S127). Here, the site C is assumed to be an online retail website typified by amazon (registered trademark), Rakuten (registered trademark), or the like. It is assumed that the server 201C embeds goods list information (for example, respective kinds of metadata that are pieces of information related to respective kinds of goods) indicative of a goods list in the top page of the site C, uses the operation infromtion to select the metadata, and embeds a JavaScript program for displaying the goods list information on the displaying unit of the operation information generation device 101, in the page as the operation information usage program.

Here, a specific example of the operation information usage program will be described. For example, there is an operation information usage program for obtaining a keyword indicative of a title of a program, video or the like, which is recently watched content, from the operation information (that is, which is watching history information indicative of watching history and also operation information including operation type information indicative of the operation type of "watch") of a specific video sharing site (alternatively, a digital terrestrial, BS, or CS broadcasting service); and selecting metadata of goods including the same keyword from metadata embedded in content; and displaying goods list information. Alternatively, in the case where the content detail information is included in the operation information, there is another operation information usage program for analyzing not only the keyword but also the content detail information; calculating appearance frequency of a category the content, a character (an actor or a talent), or the like; selecting, based on this, metadata of the goods; and displayig goods list information. In contrast, in the case where the site C is an IPTV service site such as acTVila (registered trademark) and HIKARI TV (registered trademark), there is another operation information usage program for using operation information that includes the operation type information indicative of the operation type of "watch"; determining content of a program or video, which is already watched in another site; and displaying goods list information in which this content is eliminated as goods.

The operation information generation device 101 receives, from the server 201C, an HTTP GET response including the page in which the operation information usage program is embedded as content (step S128). The operation information generation device 101 displays the received page on the displaying unit, captures operation input of the user through the operation input unit as an input event, and stores generated operation information in the operation information storage unit 510 (step S129). At the time when displaying the received page from the server 201C on the displaying unit, the operation information generation device 101 detects the operation information usage program embedded in the content, using the function of the content processor 502. Then, the operation information generation device 101 uses a function of the operation information output unit 513 so as to analyze the operation information usage program and determine the operation information requested by the execution of the operation information usage program. The operation information generation device 101 determines whether or not the operation information is available for output so as to appropriately control access. Then, the operation information generation device 101 outputs operation information that is determined to be available for output (step S130). Then, the operation information generation device 101 executes the operation information usage program and selects goods in tune with preference and interest of the user from the goods list information embedded in the page by using the operation information (for example, operation type information indicative of an operation type of "watch" for video at a site B (the server 201B)), which is output by the function of the operation information output unit 503. The operation information generation device 101 then displays the goods list information on the displaying unit (step S131).

The operation information output unit 513 may be configured to store access control policy information for whole operation information or for each piece of attribute information of the operation information and control the output of the operation information based on this access control policy information. The access control policy information is, for example, information indicating whether or not use of the operation information and/or the attribute information of the operation information is permitted. For example, this is information associated with disclosure level such as "disclosure" and "non-disclosure". "Disclosure" means permitting the use including transmission, and "non-disclosure" means rejecting the use. For example, in access control policy information, it is assumed that the operation type information is associated with the disclosure level of "non-disclosure", while the operation target information is associated with the disclosure level of "disclosure". In this case, when the server 201 requests transmission of the operation type information, the operation information output unit 513 rejects the transmission, and does not output the operation type information. On the other hand, when the server 201 requests transmission of the operation target information, the operation information output unit 513 permits the transmission, and outputs the operation target information. The access control policy information may be set for each server 201, which is a provider of the content targeted for display. The disclosure level may be set corresponding to an attribution value that is a value for the attribute information of the operation information. The operation information output unit 513 may not only refer the operation information, which is stored in the operation information storage unit 510, as described in a specific example of the operation information usage program, but also use operation information processed by various methods such as calculating simple statistics with the operation information. A method for selecting goods in tune with preference and interest of the user may be as follows. For example, the method uses a Bayesian network or the like to stochastically calculate preference information and interest information of the user from the operation information, and then selects goods that have metadata similar to the preference information and interest information.

The above configuration ensures collection of the semantic and continuous operation information of the user across the content provided by a plurality of service providers on the operation information generation device 101. In the conventional technique in which operation information is accumulated on the server 201, it is difficult to accumulate the operation information on another server 201. There may be an invasion of privacy for the user since the operation information may be accumulated only in the server 201, which are not under the control of the user. In contrast, this embodiment can solve these problems.

In this embodiment, the operation information generation device 101 uses the function of the operation information generation unit 505, so as to dynamically execute the event handler registration processing with the operation information generation program when loading content of each site provided by each service provider. Furthermore, there is not only the operation information generation program that targets specific content, but also the operation information generation program that targets any content. From this, accesses to a large indefinite number of websites can be accumulated in the operation information generation device 101 as continuous operation information. Therefore, it is possible to eliminate the need for embedding mechanisms that collect the operation information in all websites, which are provided by the service providers, in order to collect semantic and continuous operation information across the service providers on the operation information generation device 101.

Furthermore, in this embodiment, the operation information generation device 101 ensures update for the operation information generation program. Accordingly, even in the case where the layout of the website or the like is changed, it is possible to normally execute the operation information generation program and collect the operation information.

As described above, the operation information generation device 101 collects and manages semantic and continuous operation information of the user across the content, which is provided by the plurality of service providers, and allows the service providers to use the collected information. Accordingly, as described in this embodiment, the user can receive recommendation service that reflects the preference and interest of the user itself. Furthermore, the operation information that is collected and accumulated in the operation information generation device 101 is provided to the service provider side. This makes it possible to provide highly-detailed information. Thus, there is a possibility that each of service provider, terminal carrier, and a user can develop advertising business like affiliate advertising.

### Second Embodiment

Next, a second embodiment of the operation information generation device will be described. Common parts between this embodiment and the first embodiment will be described by using the same reference numerals, or the description thereof will not be repeated.

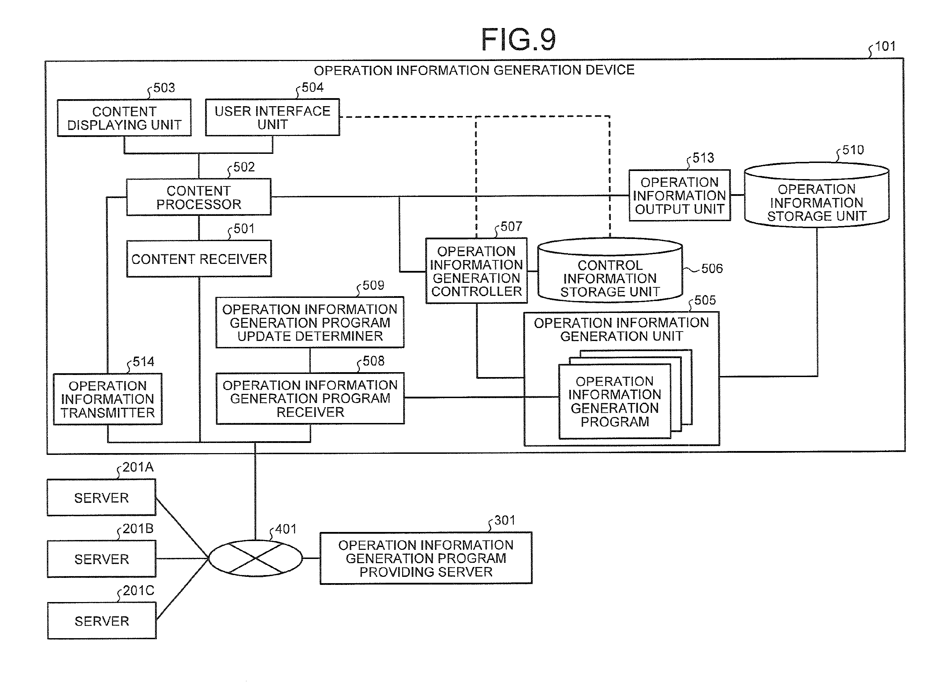

FIG. 9 is a diagram exemplarily illustrating a configuration of an operation information obtaining system and a functional configuration of an operation information generation device according to this embodiment. The configuration of the operation information obtaining system is approximately similar to that of the first embodiment. The functional configuration of an operation information generation device 101 according to this embodiment is different from that of the first embodiment in the following points. The operation information generation device 101 according to this embodiment further includes an operation information transmitter 514. This is generated on the main storage unit such as the RAM when the CPU executes the program.

The operation information transmitter 514 transmits operation information, which is output from the operation information output unit 513 based on the operation information usage program embedded in content received by the content receiver 501, to the server 201 that has transmitted the content.

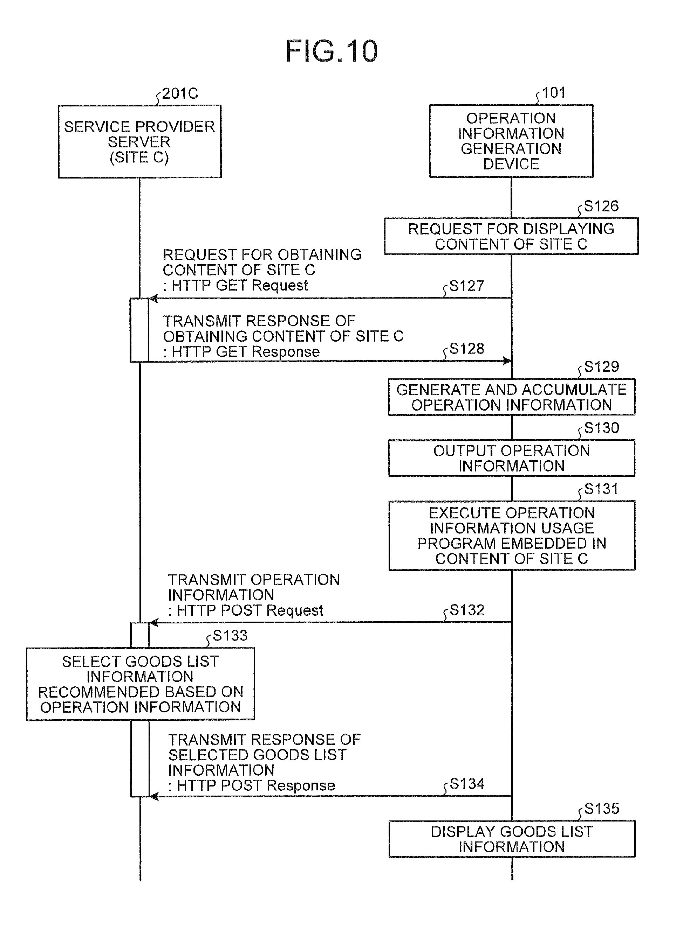

Next, a procedure of processing executed by the operation information generation device 101 according to this embodiment will be described. Procedures of operation information generation process and operation information generation program update process are approximately similar to those of the first embodiment, and therefore, the description thereof will not be repeated here. A procedure of operation information usage process according to this embodiment will be described by referring to FIG. 10. Here, similarly to the first embodiment, it is assumed that an access history to the servers 201A to 201C are collected as the operation information in a cross-sectoral manner, and stored in the operation information storage unit 510. The site C, which is provided by the server 201C, is assumed to be an online retail website typified by amazon (registered trademark) and the like, similarly to the first embodiment. In this case, the server 201C has a goods database that stores threin each piece of metadata, which is information related to respective goods to be sold. It is assumed that the server 201C embeds, in a page as the operation information usage program, the JavaScript program for obtaining operation information from the operation information generation device 101, transmitting it to the server 201C, transmitting goods list information (respective kinds of metadata that are pieces of information related to respective kinds of goods) indicative of a goods list selected based on the operation information, to the operation information generation device 101, and displaying the goods list information on the displaying unit of the operation information generation device 101.

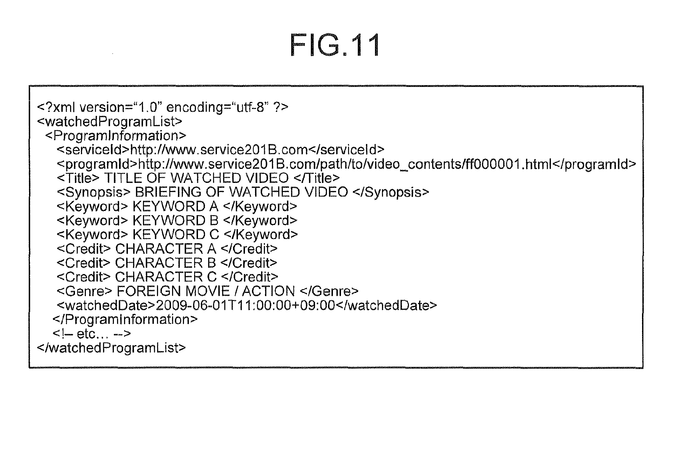

Steps S126 to S131 are similar to those of the first embodiment. In step S132, the operation information generation device 101 transmits, to the server 201C, an HTTP POST request that includes the operation information output in step S130. FIG. 11 is a diagram exemplarily illustrating a data configuration of the operation information that is transmitted to the server 201C. The drawing shows that operation information indicative of the operation target information of "video" is extracted from among the operation information pieces, and this operation information is serialized in an XML format. However, the data format and a transmission format of the operation information are not limited to this example. The operation information to be transmitted from the operation information generation device 101 may include all or a part of attribute information that is included in the operation information stored in the operation information storage unit 510. This is achieved using the access control policy information, which is described in the first embodiment. The operation information to be transmitted from the operation information generation device 101 may include information capable of being extracted from the operation information or information capable of being calculated as described in the first embodiment. When receiving the HTTP POST request including the operation information exemplarily illustrated in FIG. 11, which has been transmitted in step S132, the server 201C analyzes a payload of the HTTP POST request, and searches the goods database of the server 201C using a value set to <Title> element, a value set to <Keyword> element, and a value set to <Credit> element as search keys. Then, the server 201C selects metadata of matched goods as goods list information indicative of a recommended goods list (step S133), and transmits a HTTP POST response including the recommended goods list (step S134). The server 201C may not only refer to the operation information. Similarly to the first embodiment, the server 201C may also use operation information processed by various methods to search the goods database, and obtain metadata of matched goods.

In contrast, the operation information generation device 101 uses a function of the operation information usage program to receive the goods list information, and uses the function of the content displaying unit 503 to display the goods list information on the displaying unit (step S135). As a result, the user is allowed to receive a recommended goods list related to recently watched video corresponding to the operation information that is disclosed to the server 201C with permission of the user.

In the first embodiment, the server 201C needs to preliminary embed goods list information indicative of all possible goods in the page. However, in the second embodiment, the server 201C uses the operation information to search the metadata stored in the goods database, and is able to obtain metadata of matched goods. This expands a target range of goods available to be provided as recommended goods, thus ensuring recommendation service with higher accuracy.

As described above, with this embodiment, the operation information generation device 101 collects semantic and continuous operation information of the user across the content provided by the plurality of service providers, and transmits at least a part of the operation information to the server 201, thus ensuring recommendation service with higher accuracy.

### Third Embodiment

Next, a third embodiment of the operation information generation device will be described. Common parts among this embodiment and the first and second embodiments will be described by using the same reference numerals, or the description thereof will not be repeated.

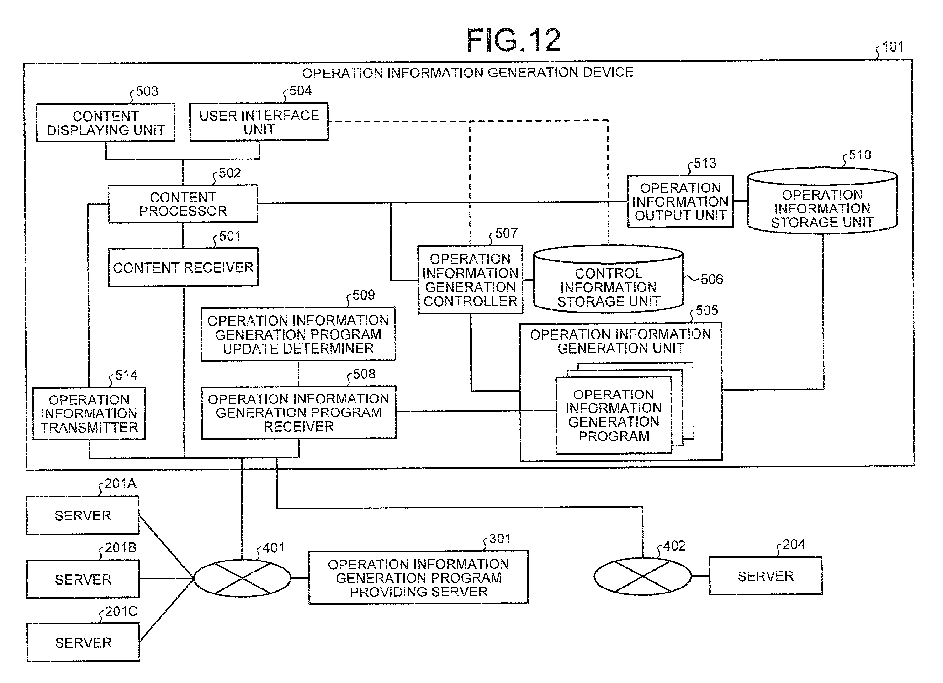

FIG. 12 is a diagram exemplarily illustrating a configuration of an operation information obtaining system and a functional configuration of an operation information generation device according to this embodiment. The operation information obtaining system according to this embodiment further includes a server 204 operated by a service provider in addition to the configuration of the operation information obtaining system according to the first embodiment or the second embodiment. The server 204 and the operation information generation device 101 are connected together through a network 402. Similarly to the network 401, the network 402 is the Internet, a closed network NGN that is quality-guaranteed, or the digital terrestrial broadcasting network, which is directly connected to the operation information generation device 101 through wired or wireless LAN. However, the network 401 and the network 402 are physical networks different from each other. Here, it is assumed that the network 401 is the Internet while the network 402 is the digital terrestrial broadcasting network. Similarly to the network 401, an operation target network ID is assigned to the network 402 to distinguish the network 402 from other networks. Similarly to the server 201, an operation target service ID is assigned to the server 204 to uniquely identify a service within the network 402. The server 204 transmits a digital terrestrial broadcasting wave, and superimposes digital terrestrial broadcasting content and content information (SI: Service Information) related to the content, thus transmitting it to the operation information generation device 101. The operation information generation program that targets the digital terrestrial broadcasting content may be superimposed on the digital terrestrial broadcasting wave, and then transmitted to the operation information generation device 101. The operation information generation program also may be preliminary transmitted from the operation information generation program providing server 301 to the operation information generation device 101. The operation information generation program also achieves the function for: analyzing a channel of the digital terrestrial broadcasting content, which is displayed on the displaying unit, and the content information, which is superimposed on the digital terrestrial broadcasting wave; and holding channel information indicative of the channel and the content information.

While the functional configuration of the operation information generation device 101 is approximately similar to that of the second embodiment, the following points are different from the first embodiment or the second embodiment. The content receiver 501 includes not only an IP communication interface function for receiving content from the server 201 connected to the network 401, but also a receiving tuner function for receiving digital terrestrial broadcasting content from the server 204 connected to the network 402. The receiving tuner function for the digital terrestrial broadcasting allows the content receiver 501 to receive digital terrestrial broadcasting waves corresponding to respective channels and receive the digital terrestrial broadcasting content through the digital terrestrial broadcasting waves corresponding to the respective channels. The content processor 502 includes not only an analyzing and executing function for analyzing and executing a JavaScript with an HTML parser and renderer, but also an MPEG-2 decoder function for decoding the digital terrestrial broadcasting content, which is received at the content receiver 501.
The operation input unit of the operation information generation device 101 includes a remote controller for outputting an operation signal corresponding to the operation input of the user as a user interface of a digital television or the like. The user interface unit 504 further includes a function of a receiving and decoding unit that receives and decodes the operation signal that is output from the remote controller. In the case where the digital terrestrial broadcasting content and the operation information generation program are superimposed on the digital terrestrial broadcasting wave, the operation information generation program receiver 508 obtains the operation information generation program from the digital terrestrial broadcasting wave, and stores it in the auxiliary storage unit.

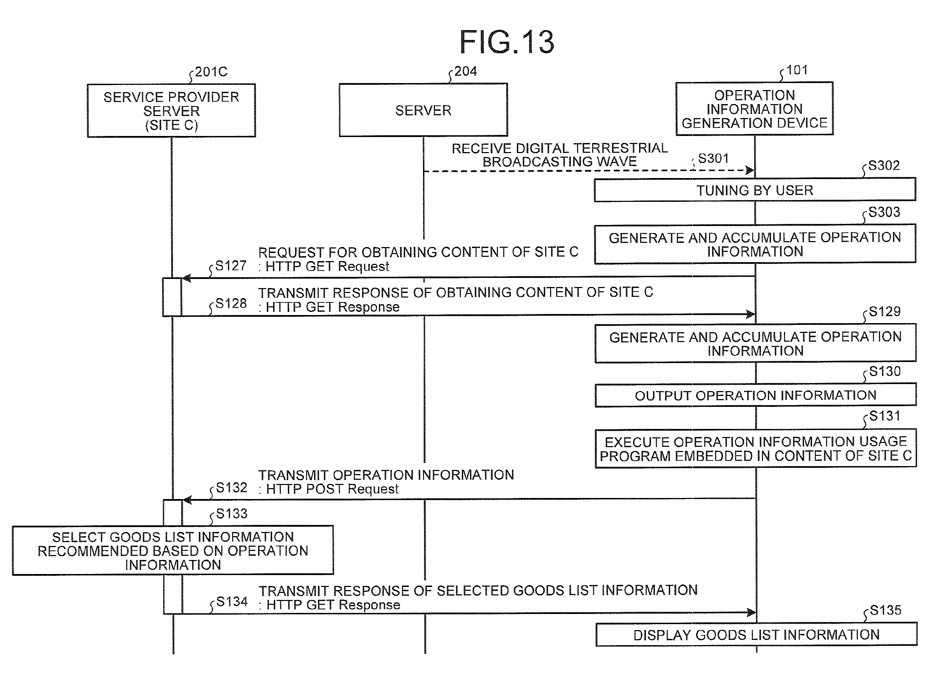

Next, a procedure of processing executed by the operation information generation device 101 according to this embodiment will be described. Procedures of the operation information generation process and the operation information generation program update process are approximately similar to that of the first embodiment and therefore the description thereof will not be repeated here. A procedure of operation information usage process according to this embodiment will be described by referring to FIG. 13. Here, similarly to the first embodiment, it is assumed that the history of access to the servers 201A to 201C are collected as the operation information in a cross-sectoral manner, and stored in the operation information storage unit 510. The site C, which is provided by the server 201C, is assumed to be an online retail website typified by amazon (registered trademark) and the like, similarly to the first embodiment. The server 201C is also assumed to embed, in a page, the operation information usage program similar to that of the second embodiment.

When the user may perform operation input to select a channel (tuning) through the operation input unit of the operation information generation device 101 while the operation information generation device 101 is receiving a digital terrestrial broadcasting wave transmitted from the server 204 (step S301), the operation information generation device 101 receives the operation input (step S302), and then receives the digital terrestrial broadcasting wave of the selected channel, thus receiving the digital terrestrial broadcasting content. At this time, the operation information generation device 101 executes an operation information generation program that targets the digital terrestrial broadcasting content. The operation information generation device 101 uses an input event of selecting the channel, the channel information, and content information so as to generate the operation type information, which indicates the operation type of "watch", and the operation information, which includes the operation target network ID and the operation target service ID, and then, the operation information generation device 101 stores the generated information in the operation information storage unit 510 (step S303). Thereby, the pieces of operation information at respective websites provided on the plurality of mutually different networks 401 and 402 are stored in the operation information storage unit 510. Steps S127 to S135 after this processing are similar to those of the second embodiment.

As described above, according to this embodiment, the operation information generation device 101 can obtain pieces of operation information at the respective websites, which are provided on the plurality of the different networks, and integrally manage the operation information. This allows the service providers to utilize the pieces of operation information across the networks. In the above description, an example in which the operation information related to tuning of the digital terrestrial broadcasting is generated is described. Instead, the operation information may be generated according to the operation input for data broadcasting content (BML content) that is received through data broadcast wave.

### Fourth Embodiment

Next, a fourth embodiment of the operation information generation device will be described. Common parts among this embodiment and the first to third embodiments will be described by using the same reference numerals, or the description thereof will not be repeated.

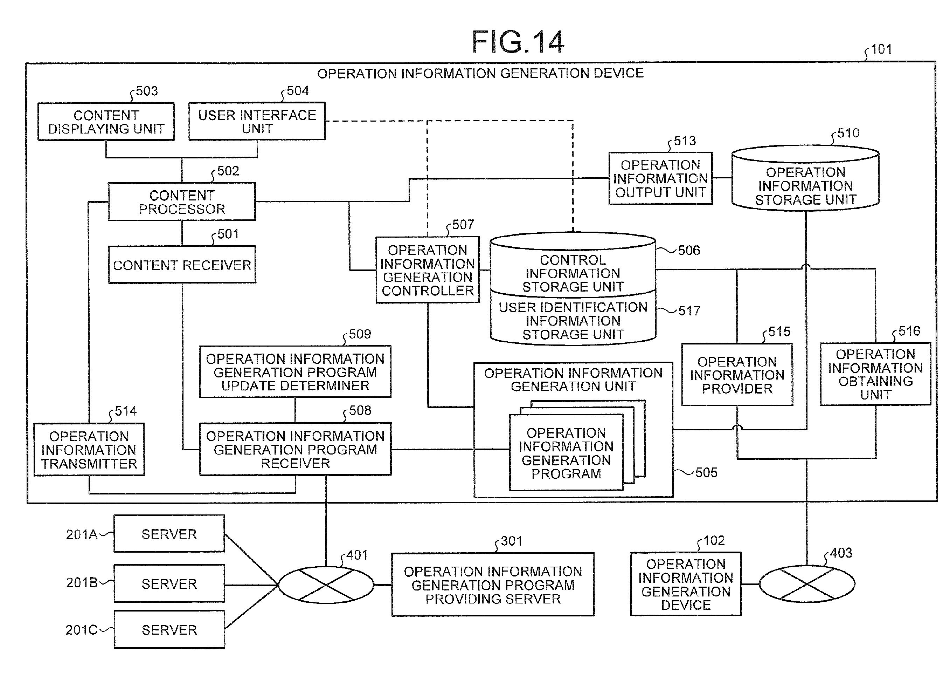

FIG. 14 is a diagram exemplarily illustrating a configuration of an operation information obtaining system and a functional configuration of an operation information generation device according to this embodiment. The operation information obtaining system according to this embodiment further includes an operation information generation device 102, which is operated by a service provider, in addition to the configuration of the operation information obtaining system according to the first embodiment or the second embodiment. The operation information generation device 102 and the operation information generation device 101 are connected together through a network 403. That is, in this embodiment, the operation information obtaining system includes a plurality of operation information generation devices 101 and 102, which are connected together through the network 403. The network 403 may be connected to another operation information generation device. The network 403 is, for example, a wired or wireless home LAN, which is referred to as a home network. The operation information generation device 102 has a configuration that is approximately similar to the configuration of the operation information generation device 101. A device ID is also assigned to the operation information generation device 102 to distinguish the operation information generation device 102 from the operation information generation device 101 and another information processing apparatus, similarly to the operation information generation device 101. Communication I/Fs included in the respective operation information generation devices 101 and 102 are communicable with one another through the network 403. These operation information generation devices 101 and 102 are assumed to be personal computers or mobile phones that are used exclusively by the users.

The operation information generation device 101 has a functional configuration that is approximately similar to that of the second embodiment, but different from the second embodiment in the following points. The operation information generation device 101 further includes an operation information provider 515, an operation information obtaining unit 516, and a user identification information storage unit 517. The operation information provider 515 and the operation information obtaining unit 516 are generated on the main storage unit such as the RAM when the CPU executes the programs. The user identification information storage unit 517 is, for example, a database management system established in a main storage unit or the auxiliary storage unit. The auxiliary storage unit stores therein "device type" indicative of a device type of the operation information generation device 101 in addition to the above-described device ID assigned to the operation information generation device 101.

The operation information obtaining unit 516 detects another operation information generation device (herein, the operation information generation device 102), which is connected through the network 403. Then, the operation information obtaining unit 516 transmits an operation information request message, which requests the operation information, to the operation information generation device 102 thus detected. The operation information obtaining unit 516 detects the other operation information generation device connected through the network 403, using the following method, for example. The operation information obtaining unit 516 multicasts device search messages through the network 403 so as to search for the other operation information generation device connected to the network 403. If the other operation information generation device receives the device search message, the other operation information generation device multicasts, through the network 403, device advertisement messages advertising that own device is connected to the network 403. Thereby, the operation information obtaining unit 516 and the other operation information generation device automatically detect one another. In this embodiment, the operation information obtaining unit 516 uses a UPnP (Universal Plug And Play) protocol so as to perform transmitting and receiving of the device search messages and the device advertisement messages. However, the protocol is not limited to the UPnP protocol. One of a kind protocol may be used. The device search message includes a device type of the search target. The device advertisement message includes a URL that shows a location to store device information. The store device information includes the device ID of the operation information generation device 102, which is at a transmitting side, and a file path of the service information. The service information includes URL information indicative of a URL of the operation information generation device that provides a service (referred to as operation information providing service) that transmits operation information in response to the operation information request message. A URL to obtain the service information itself is managed along with an identifier (for example, urn:schemas-upnp-org:service:getEventInformation:1) indicative of the operation information providing service on UPnP architecture. The device information includes a file path corresponding to the identifier. This allows obtaining the service information by accessing the file path. The service information may include UPnP action information.

The operation information obtaining unit 516 performs user authentication, which is described later, with the other operation information generation device 102 after transmitting the operation information request message, and then, the operation information obtaining unit 516 receives the operation information along with the user identification information of the other operation information generation device 102. Alternatively, user identification information that is input for the user authentication described below may be stored in advance in the operation information generation device 101, and if an authentication result received from the operation information generation device 102 indicates successful authentication, this stored user identification information may be regarded as the user identification information in the operation information generation device 102. Then, the operation information obtaining unit 516 adds the user identification information of the operation information generation device 102 to the operation information, and stores it in the operation information storage unit 510. Concurrently, the operation information obtaining unit 516 associates the user identification information of the operation information generation device 101, the user identification information of the own device (the operation information generation device 101), and the device ID of the other operation information generation device 102 included in the device advertisement message with one another. Then, the operation information obtaining unit 516 stores these pieces of information in the user identification information storage unit 517. The operation information obtaining unit 516 is, for example, achieved based on an HTTP client function. In this case, the operation information request message for requesting the operation information is an HTTP request. When limiting operation information to be obtained, an obtaining condition may be included in the URL as a query parameter, or may be included in a payload of the HTTP request. As the obtaining condition, a specified query parameter is, for example, an obtaining request range or an operation target service ID for a specific service.

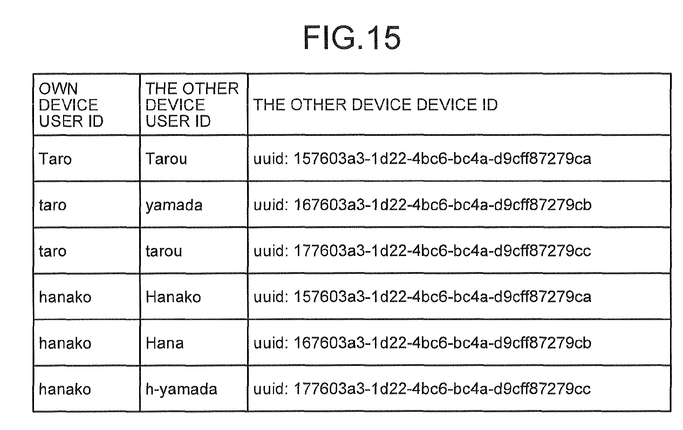

The operation information provider 515 receives the operation information request message, which requests the operation information transmitted from the other operation information generation device 102 connected through the network 403. Then, the operation information provider 515 performs user authentication. When the user authentication has succeeded, the operation information provider 515 transmits the operation information, which is stored in the operation information storage unit 510, and the user identification information of the own device to the other operation information generation device 102. As an example, the operation information provider 515 is achieved based on an HTTP server function published on the network 403. At this time, the user authentication may employ, for example, an HTTP digest authentication or a basic authentication. In the case where high-security level is required, a certificate-based authentication scheme may be used. In user authentication using these methods, simplest configuration is as follows. The operation information provider 515 requests user identification information to the other operation information generation device 102, and then receives the user identification information from the other operation information generation device 102. In this case, if the user identification information storage unit 517, which is described below, stores the user identification information as user identification information of own device, the operation information provider 515 replies authentication result (information indicative of success or not) assuming the user authentication has succeeded. As another configuration, the operation information provider requests authentication information (for example, a password) indicative of validity of the user along with the user identification information. When the operation information provider receives the user identification information and the authentication information from the other operation information generation device 102, this user identification information is stored in the user information storage unit 517 as user identification information of the own device. At this time, if the authentication information similarly stored and the received authentication information are matched, it may be assumed that the user authentication has succeeded. The authentication information may be configured to be stored by further attaching a column of "own device user authentication information" to the user information storage unit 517 illustrated in FIG. 15. In addition to an information table of the user information storage unit 517 illustrated in FIG. 15, another information table that includes "own device user ID" and "own device user authentication information", which are to be referred, may be prepared separately.

The user identification information storage unit 517 associates pieces of the user identification information of the operation information generation devices 101 and 102 one another for the same user, and stores therein the pieces of the user identification information. The association between the respective pieces of the user identification information of the operation information generation devices 101 and 102 is performed based on the above-described user authentication. FIG. 15 is a table exemplarily illustrating a data configuration of the user identification information storage unit 517. The user identification information storage unit 517 associates the user identification information of the operation information generation device 101, which is the own device, and the user identification information of the other operation information generation device 102, with the device ID of the other operation information generation device 102, for the respective users, and stores therein the information. While in the drawing, the device ID is expressed by a UUID (Universal Unique Identifier), it may be expressed by a MAC address or the like.

The operation information generation device 102 has a functional configuration that is similar to the functional configuration of the operation information generation device 101, and therefore the description thereof is omitted herein. Hereinafter, for ease of explanation, reference numerals for respective parts in the functional configuration of the operation information generation device 102 employs the same reference numerals as those used in the functional configuration of the operation information generation device 101.

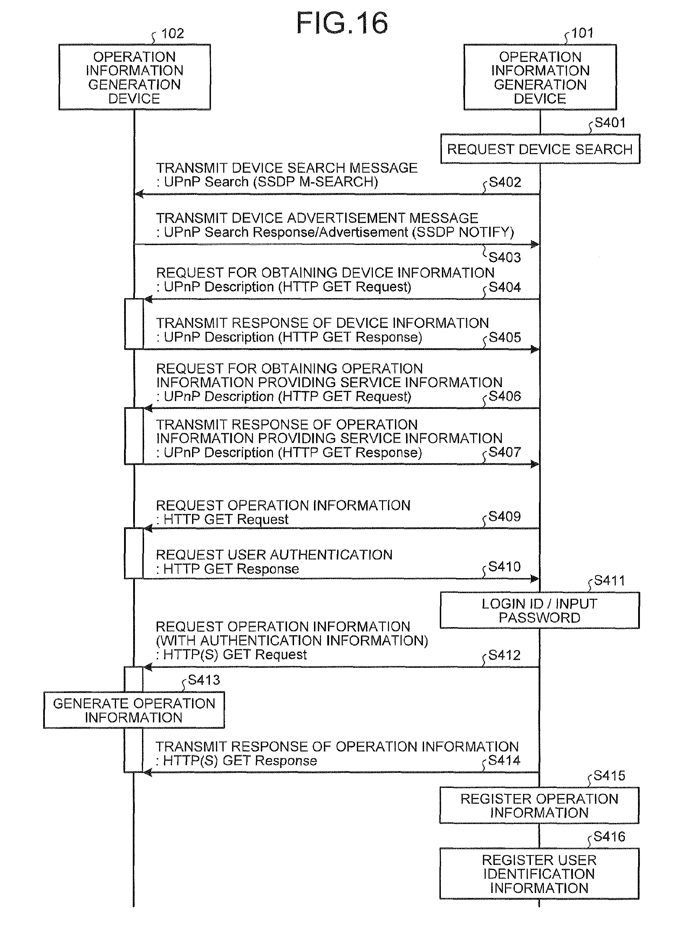

Next, a procedure of the processing executed by the operation information generation devices 101 and 102 according to this embodiment will be described by referring to FIG. 16. It is assumed that in this embodiment, a user X has login accounts to login the respective operation information generation devices 101 and 102. It is also assumed that a login account of the user X for the operation information generation device 101 is "taro", while a login account for the operation information generation device 102 is "Tarou". In this case, "taro" is the user identification information of the operation information generation device 101, while "Tarou" is the user identification information of the operation information generation device 102. The operation information generation devices 101 and 102 are assumed to store respective pieces of the operation information.

The operation information obtaining unit 516 of the operation information generation device 101 transmits the device search messages, which searches for another operation information generation device connected to the network 403, using an SSDP (Simple Service Discovery Protocol) M-SEARCH method, for example, when the own device is initiated, thereby multicasting the device search messages through the network 403 (steps S401 to S402). At this time, in the SSDP M-SEARCH method, the device search message includes, in a header of the method, a character string (for example, urn:schemas-upnp-org:device:eventInformationDirectory:1), which indicates the device type of the operation information generation device 101. A timing of transmitting the device search messages other than the timing of initiation may be a timing of recovery from suspend, or a timing of use of the operation information by execution of the operation information usage program received from the server 201 connected to the network 401. Alternatively, transmission of the device search message may be scheduled to be performed regularly.

On the other hand, when the operation information provider 515 of the operation information generation device 102 receives the device search message transmitted in step S402, the operation information provider 515 transmits, as a response, the device advertisement message including a URL indicative of the location to store the device information, which indicates the device ID of the operation information generation device 102 and the file path of the service information (step S403). When the operation information obtaining unit 516 of the operation information generation device 101 receives the device advertisement message transmitted in step S403, the operation information obtaining unit 516 accesses the URL included in the device advertisement message (step S404), and obtains the device information of the operation information generation device 102 in an XML format of "Device Description" specified by the UPnP (step S405). Further, the operation information obtaining unit 516 of the operation information generation device 101 obtains the service information through the file path described by the device information (steps S406 to S407).

It is assumed that the service information includes URL path information (http://192.168.0.102:8888/get_event_info) indicative of a URL of the operation information generation device that receives the operation information request. This URL is assumed to be a URL of the operation information generation device 102. The operation information obtaining unit 516 of the operation information generation device 101 accesses the URL indicated by the URL path information, and transmits the operation information request message for requesting the operation information to the operation information generation device 102 (step S409). The operation information request message is, for example, the HTTP GET request. When the operation information provider 515 of the operation information generation device 102 receives the operation information request message, the operation information provider 515 transmits a response message for requesting the user authentication to the operation information generation device 101 using the HTTP GET response (step S410).

When the operation information obtaining unit 516 of the operation information generation device 101 receives the response message, the operation information obtaining unit 516 displays, on the displaying unit through the user interface unit 504, a pop-up that prompts the user to input the login account and the password as the authentication information to perform the user authentication. When the login account and the password of the operation information generation device 102 is input by the user X through the operation input unit, the operation information obtaining unit 516 receives this input (step S411) and transmits, to the operation information generation device 102, the operation information request message that includes the login account and requests the operation information (step S412). At this time, it is preferred that the communication employ not HTTP, but HTTPS to encrypt the operation information request message. The operation information request message may include an obtaining condition of the operation information as a query parameter. As the obtaining condition, for example, in the case where the obtaining request range is specified, the query parameter employs "http://192.168.0.102:8888/get_event_info? start_date=20090101120000". This is a query parameter that specifies operation information with operation start date and time information indicative of date and time after "12:00:00 on 1 January 2009" only as an obtaining target.

When the operation information provider 515 of the operation information generation device 102 receives the operation information request message transmitted in step S412, the operation information provider 515 performs the user authentication referring to the user identification information storage unit 517. Specifically, in the case where the user identification information and the authentication information (the password) of the user X in the own device (the operation information generation device 101), which are included in the operation information request message, are matched with those stored in the user identification information storage unit 517, the operation information provider 515 determines the user authentication has succeeded. In this case, the operation information provider 515 reads out operation information corresponding to the operation information request message from the operation information storage unit 510 (step S413). In the case where the operation information request message includes the obtaining condition, the operation information provider 515 reads out operation information corresponding to the obtaining condition from the operation information storage unit 510. Then, the operation information provider 515 transmits, to the operation information generation device 101, a response message including the read-out operation information and the user identification information (step S414). At this time, a data format for a payload of the response may be, for example, an XML format where the operation information (the operation information including content information as the operation target) is serialized. This operation information is exemplarily illustrated in FIG. 3. Any other data format may be employed as a data format of the payload, insofar as at least the data format can transmit respective pieces of the operation information, which are stored in the operation information storage unit 510 of the operation information generation device 102, without degradation.

When the operation information obtaining unit 516 of the operation information generation device 101 receives the response message transmitted in step S414, the operation information obtaining unit 516 stores the operation information, which is included in the response message, in the operation information storage unit 510 (step S415). Then, the operation information obtaining unit 516 stores therein the user identification information (the user account of the operation information generation device 102 included in the operation information request message), which is included in the response message, the user identification information of the user X in the own device, and the device ID of the operation information generation device 102, which is included in the device advertisement message received in step S405, so as to be associated with one another (step S416).

As described above, the operation information generation device 101 according to this embodiment can share the operation information with the other operation information generation device 102 connected through the network 403, such as a home network. This allows the service provider side to utilize this shared information as described in the first to third embodiments.

### Modification

The present invention is not limited to the above-described embodiments as they are. The present invention can be embodied by modifying the constituent elements within the scope of the present invention in an implementation phase. A plurality of constituent elements that are disclosed in the embodiments may appropriately be combined to configure various inventions. For example, some of the constituent elements illustrated in the embodiments may be eliminated. Further, constituent elements in different embodiments may be occasionally combined. Various modifications are possible as described in the following examples.

In each of the above-described embodiments, various computer programs executed in the operation information generation device 101 can be saved on a computer connected to a network such as the Internet and can be downloaded therefrom through the network. Alternatively, such various computer programs can be provided as a computer program product in the form of an installable file or an executable file on a computer-readable storage medium such as a CD-ROM, an FD (flexible disk), a CD-R, or a DVD (digital versatile disk).

In each of the above-described embodiments, the operation information generation device 101 may not include the operation information storage unit 510, but may store the generated operation information in a data server connected through a dedicated line or a network. In this case, in the fourth embodiment, when receiving an operation request message from the other operation information generation device 102, the operation information generation device 101 may transmit the operation information to the other operation information generation device 102 after obtaining the operation information from the data server.

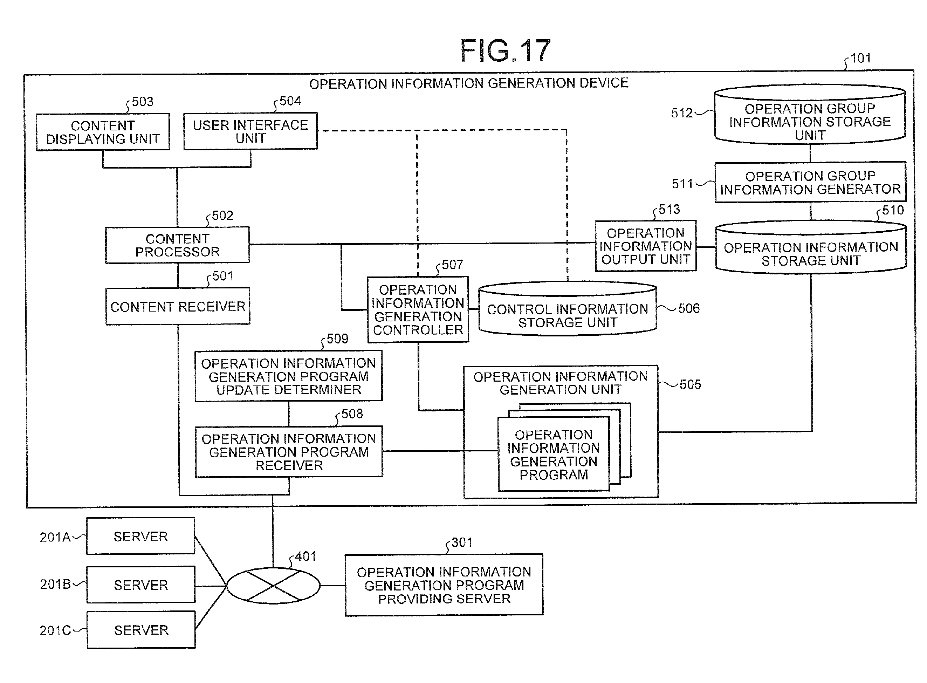

In each of the above-described embodiments, in order that the operation information, which is stored in the operation information storage unit 510, is used for calculating the preference information and the interest information of the user with higher accuracy, the individual pieces of the operation information may not be independently handled, but may be organized to use them as more meaningful continuous action information. FIG. 17 is a block diagram exemplarily illustrating a configuration of an operation information obtaining system and a functional configuration of the operation information generation device 101 according to this modification. The operation information generation device 101 according to this modification further includes an operation group information generator 511 and an operation group information storage unit 512 in addition to respective units of the above-described operation information generation device 101.

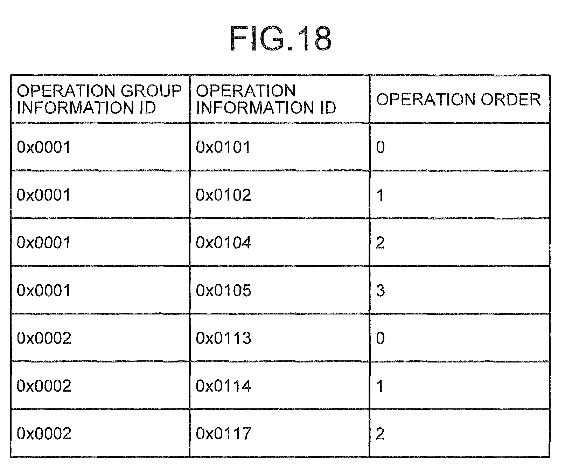

The operation group information generator 511 uses the previous operation information identification ID included in the operation information, so as to capture association between pieces of the operation information. Also, the operation group information generator 511 uses the operation start date and time information, which is included in the operation information, and the operation type information (especially, "search"), so as to capture a timing between actions. The operation group information generator 511 generates, as operation group information, continuous collection of operation information that specifies a start point and an end point, and stores it in the operation group information storage unit 512. At this time, in the operation group information generator 511, the start point (first operation information) of the operation group information is determined by a point at which the operation input that instructs searching is input, or at which the home page of the Internet browser application is displayed. Alternatively, the operation group information generator 511 may capture a timing between pieces of the operation group information based on date and time indicated by operation start date and time so as to determine the start point of the operation group information. The operation group information storage unit 512 stores therein the operation group information generated by the operation group information generator 511. FIG. 18 is a view exemplarily illustrating the operation group information. As illustrated in the drawing, the operation group information includes at least: an operation group information ID used to identify the operation group information; an operation information ID indicative of operation information that forms the operation group information; and an operation order information indicative of an order of respective pieces of the operation information. The operation information output unit 513 also uses the operation group information stored in the operation group information storage unit 512 to calculate the above-described preference information and interest information of the user. Then, the operation information output unit 513 allows the server to use these pieces of information through the operation information usage program. Similarly, in the second to fourth embodiments, the operation information generation device 101 may further include the operation group information generator 511 and the operation group information storage unit 512.

In the fourth embodiment, the user authentication may employ simple PIN code authentication without the user identification information of the user. Specifically, in the PIN code authentication, the operation information provider 515 displays numbers with several digits (a PIN code) on the displaying unit through the content displaying unit 503 when receiving the operation information request message. Then, the operation information provider 515 transmits the PIN code, which is input through the user interface unit 504, to the other operation information generation device 102. Then, if the operation information provider 515 receives the same PIN code from the operation information generation device 102, which has transmitted the operation information request message, it is considered proven to be physically close.

Although in the fourth embodiment, both of the operation information generation devices 101 and 102 are assumed to be personal computers or mobile phones that are used exclusively by the users, AV equipment (a digital television, a hard disk recorder, and a portable media player), or the like is also applicable. The AV equipment often does not have a concept of user. However, in the case where the AV equipment is assumed to be an operation information generation device, the user identification information may be handled as "anonymous", and the user identification information storage unit 517 may store this kind of user identification information in the operation information generation device. Then, the operation information provider 515 may include a determiner that determines availability for providing the operation information based on whether the user identification information is "anonymous" or "non-anonymous". In this case, in the case where the determiner of the operation information provider 515 receives the operation information request message from the operation information generation device that has transmitted the user identification information indicative of "anonymous", the determiner may perform access control such that unconditionally rejects transmission of the operation information. In contrast, in the case where an operation information generation device that is exclusively used by a specific user transmits the operation information request message to an operation information generation device of an anonymous user (an unspecified user), the determiner of the operation information provider 515 may unconditionally permit transmission of the operation information. That is, in the case where the operation information generation device such as a personal computer and a mobile phone that has transmitted user identification information of a specific user transmits the operation information request message to the operation information generation device such as AV equipment that has transmitted the user identification information indicative of "anonymous", the AV equipment may unconditionally transmit operation information that is stored in the AV equipment.

As described above, the operation information provider 515 may include the determiner that determines whether to permit transmission of the operation information in response to the operation information request message, which includes the user identification information indicative of "anonymous" and the user identification information of the specific user. This consequently allows the operation information provider 515 to control transmission of the operation information based on whether or not the user is anonymous.

Similarly, the operation information output unit 513 may also control output of the operation information based on whether or not the user is anonymous. That is, the operation information output unit 513 may include a determiner that determines whether to output the operation information in accordance with the operation information request message including the operation information request message, which includes the user identification information indicative of "anonymous", and the user identification information of the specific user. Thereby, the operation information output unit 513 controls the output of the operation information.

Information indicative of a specific user or an anonymous user is not limited to the user identification information. For example, the device type of the operation information generation device 101 may be employed. In this case, the operation information generation device further includes a storage unit that manages the device type and information indicative of anonymous equipment or non-anonymous equipment, and the operation information generation device refers to those pieces of information of the storage unit so as to determine that equipment with a certain device type is assumed to be used by an anonymous user or a specific user. For example, in the case where the device type of the operation information generation device 101 indicates a personal computer or a mobile phone, it may be determined that the operation information generation device 101 is an operation information generation device that is used by a specific user. In the case where the device type indicates AV equipment, it may be determined that the operation information generation device 101 is an operation information generation device that is used by an anonymous user. The device type itself may be obtained using the device search message and the device advertisement message.

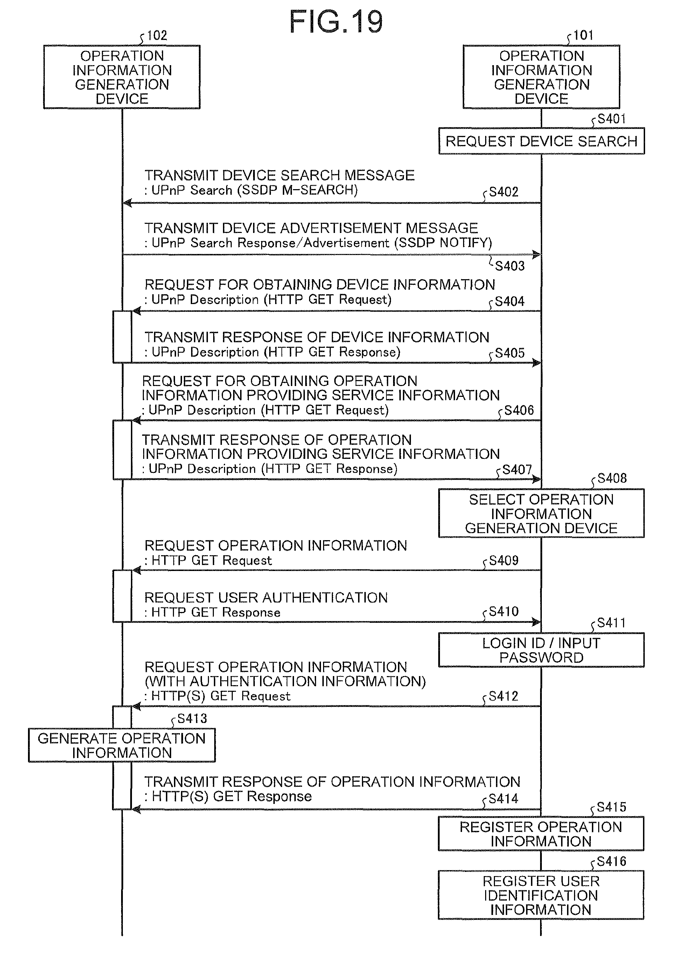

In the above-described fourth embodiment, in the case where there is a plurality of operation information generation devices on the network 403, the operation information generation device 101 may allow the user to select an operation information generation device to target for requesting the operation information. FIG. 19 is a flowchart illustrating a procedure of the processing executed by operation information generation devices 101 and 102 according to this modification. Here, it is assumed that after step S407, the operation information generation process is executed by a certain trigger such as execution of the operation information usage program embedded in the content that is accessed by the Internet browser on the operation information generation device 101. The operation information generation device 101 displays a selection screen on the displaying unit to allow the user to select the operation information generation device that is targeted for requesting the operation information among the plurality of operation information generation devices. When the user performs the operation input to select a specific operation information generation device (here, it is assumed to be the operation information generation device 102) through the operation input unit, the operation information generation device 101 receives the operation input (step S408). Then, the operation information generation device 101 transmits the operation information request message for requesting the operation information to the selected operation information generation device 102. This should not be construed in a limiting sense. The operation information generation device 101 may transmit the operation information request message to all operation information generation devices, to which the operation information can be transmitted, in response to the operation information request message.

### Reference Signs List

101, 102 OPERATION INFORMATION GENERATION DEVICE 201, 201A, 201C, 204 SERVER 301 OPERATION INFORMATION GENERATION PROGRAM PROVIDING SERVER 401, 402, 403 NETWORK 501 CONTENT RECEIVER
502 CONTENT PROCESSOR
503 CONTENT DISPLAYING UNIT
504 USER INTERFACE UNIT
505 OPERATION INFORMATION GENERATION UNIT
506 CONTROL INFORMATION STORAGE UNIT
507 OPERATION INFORMATION GENERATION CONTROLLER 508 OPERATION INFORMATION GENERATION PROGRAM RECEIVER
509 OPERATION INFORMATION GENERATION PROGRAM UPDATE DETERMINER
510 OPERATION INFORMATION STORAGE UNIT
511 OPERATION GROUP INFORMATION GENERATOR
512 OPERATION GROUP INFORMATION STORAGE UNIT 513 OPERATION INFORMATION OUTPUT UNIT
514 OPERATION INFORMATION TRANSMITTER
515 OPERATION INFORMATION PROVIDER
516 OPERATION INFORMATION OBTAINING UNIT
517 USER IDENTIFICATION INFORMATION STORAGE UNIT

## Claims

1. An operation information generation device comprising:
a receiver configured to receive content from a server connected to a first network;
a processor configured to decode the content;
a display control unit configured to display the decoded content on a displaying unit;
a reception unit configured to receive an operation from a user; and
an operation information generation unit configured to execute an operation information generation process of generating operation information indicative of substance of the operation received for the content displayed on the displaying unit.

2. The operation information generation device according to claim 1, further comprising:
a first storage unit configured to store therein control information including target content information and executability information, the target content information specifying the content that is a target content of the operation information generation process, the executability information indicating whether the operation information generation process is executable; and
an execution determiner configured to determine whether to execute the operation information generation process to the content, using the control information, wherein
the operation information generation unit executes the operation information generation process according to a determination result of the first determiner so as to generate operation information, the operation information including at least one of:
first operation information identification information for identifying the operation information;
content identification information for identifying the content;
operation type information indicating a type of substance of the operation;
operation type identification information identifying an operation target corresponding to the type of the operation;
second operation information identification information for identifying operation information that indicates substance of an operation received at the reception unit before the operation; and
user identification information including one of: information indicating that an unspecified user has performed the operation; and information identifying a user that has performed the operation.

3. The operation information generation device according to claim 2, wherein
the target content information indicates content specification information including one of: information indicating that the target content of the operation information generation process is a given target; and information for specifying the target content,
the operation information generation device further includes a second storage unit that stores therein a first program for executing the operation information generation process, and
the first storage unit stores therein the control information for each of the first programs, wherein
the execution determiner includes:
a selector configured to select at least one of the first programs that targets the content displayed on the displaying unit, using the content specification information; and
a first determiner configured to determine, using the executability information, whether to execute the selected first program, wherein
the operation information generation unit configured to execute the first program that is determined to be executed to the content, so as to generate the operation information.

4. The operation information generation device according to claim 3, further comprising
a first receiver configured to receive the first program from the server or another server through the first network.

5. The operation information generation device according to claim 4, wherein
the first storage unit stores therein the control information including at least one of first revision information and second revision information, the first revision information indicating date and time at which the first program is updated, the second revision information indicating date and time at which the content targeted for execution of the operation information generation program is updated,
the operation information generation device further includes an update determiner configured to determine whether to update the first program in response to one of: an execution failure of the first program; and date and time indicated by the first revision information and the second revision information, and
the first receiver receives difference information from the server or the other server in a case where the first program is determined to be updated, the difference information being one of: all of the updated first program; and a updated part of the first the program.

6. The operation information generation device according to claim 5, further comprising:
a second storage unit configured to store the operation information;
a second receiver configured to receive, from another operation information generation device connected to a second network, the operation information stored in the other operation information generation device; and
a first transmitter configured to transmit, to the other operation information generation device, the operation information stored in the second storage unit.

7. The operation information generation device according to claim 6, further comprising:
a third storage unit configured to store therein first user identification information and second user identification information so as to be associated with each other, the first user identification information identifying a user in the operation information generation device, the second user identification information identifying the same user in the other operation information generation device; and
a third receiver configured to receive a message to request the operation information from the other operation information generation device, the message including the second user identification information, wherein
the first transmitter transmits the operation information stored in the second storage unit to the other operation information generation device in a case where the first user identification information, which is associated with the second user identification information, of a user identified by the second user identification information is stored in the third storage unit.

8. The operation information generation device according to claim 7, wherein
a second program for using the operation information is embedded in the content,
the operation information generation device further includes:
an executing unit configured to execute the second program; and
an output unit configured to output the operation information that is requested to be accessed in response to execution of the second program, and
the display control unit changes substance of the content to be displayed using the output operation information.

9. The operation information generation device according to claim 8, further comprising
a second transmitter configured to transmit the output operation information to the server in a case where transmission of the operation information to the server is requested in response to the execution of the second program.

10. The operation information generation device according to claim 9, further comprising:
a fourth storage unit configured to store therein device information indicating whether the operation information generation device is used by an unspecified user or used by a specific user;
a determiner configured to determine whether the operation information generation device, which executes the second program, is used by an unspecified user or used by a specific user using the device information stored in the fourth storage unit;
a determiner configured to determine whether to output the operation information according to the user identification information in a case where the operation information generation device is used by the specific user; and
an output unit configured to output the operation information according to a determination result of the determiner.
